# EUROPÄISCHE PATENTANMELDUNG

(11) **EP 4 233 551 A2**
(43) Veröffentlichungstag der Anmeldung: **30.08.2023**
(21) Anmeldenummer: 22186850.8
(22) Anmeldetag: 26.06.2020
(51) Int. Cl.: A22C 17/00

(54) **VERFAHREN UND SYSTEM ZUR VERARBEITUNG VON PRODUKTEN**

(30) Priorität: 04.07.2019 DE 102019118048; 10.10.2019 DE 102019127275
(62) Teilanmeldung aus: 20739577.3
(71) Anmelder: Weber Maschinenbau GmbH Breidenbach, 35236 Breidenbach (DE)
(72) Erfinder: Schaub, Joachim, 35116 Hatzfeld-Reddinghausen (DE); Schneider, Patrick, 35457 Lollar (DE); Rother, Ingo, 35236 Breidenbach (DE); Zecher, Steffen, 35460 Staufenberg (DE); Nispel, Thomas, 35232 Dautphetal (DE); Schmeiser, Jörg, 87487 Wiggensbach (DE); Ruedin, Pedro, 9014 St. Gallen (CH)
(74) Vertreter: Manitz Finsterwald Patent- und Rechtsanwaltspartnerschaft mbB

(57) **Zusammenfassung**

Bei einem System zur Verarbeitung von aufzuschneidenden und/oder zu zerteilenden Lebensmittelprodukten, insbesondere zur Verarbeitung von Frischfleisch und/oder von Bacon, mit einer Verarbeitungslinie, die mehrere Arbeitsstationen und eine ein- oder mehrspurige Transporteinrichtung zum Transport der Produkte entlang einer Transportstrecke von Arbeitsstation zu Arbeitsstation umfasst, weist zumindest eine der Arbeitsstationen ein Mittel zur Bestimmung wenigstens eines Parameters auf, wobei das Mittel mit einer Auswerte- und Steuereinrichtung verbunden ist, die dazu ausgebildet ist, in Abhängigkeit des wenigstens einen Parameters ein Steuersignal zu erzeugen.

## Beschreibung

Die Erfindung betrifft ein System zur Verarbeitung von Produkten, insbesondere zur Verarbeitung von Frischfleisch.

Ferner betrifft die vorliegende Offenbarung ein Verfahren zur Verarbeitung von aufzuschneidenden und/oder zu zerteilenden Lebensmittelprodukten, insbesondere zur Verarbeitung von Frischfleisch und/oder von Bacon, in einer Verarbeitungslinie mit mehreren Arbeitsstationen, wobei die Produkte entlang einer Transportstrecke ein- oder mehrspurig von Arbeitsstation zu Arbeitsstation transportiert werden.

Zur Verarbeitung von Produkten und insbesondere von Frischfleisch ist häufig eine Vielzahl unterschiedlicher Bearbeitungsschritte notwendig, um das gewünschte Resultat zu erhalten. Eine solche Verarbeitung kann beispielsweise darauf gerichtet sein, aus einem Natur- bzw. Frischfleischprodukt Portionen aus einer Scheibe oder mehreren Scheiben dieses Produkts zu erzeugen. Neben dem Erzeugen der Scheiben und Erstellen der Portionen sind dabei häufig weitere, vorhergehende Bearbeitungsschritte notwendig, um die Produkte für das Schneiden zu präparieren. Entsprechend können die Produkte bei derartigen Verfahren zur Verarbeitung von Produkten bzw. in Systemen zu einer solchen Verarbeitung entlang einer Transportstrecke transportiert und an mehreren Arbeitsstationen schrittweise bearbeitetet werden, wobei jede der Arbeitsstationen zu wenigstens einem speziellen Bearbeitungsschritt vorgesehen und ausgebildet ist. Dabei kann die Transportstecke grundsätzlich auch mehrspurig ausgebildet werden, um allgemein den Produktdurchsatz durch eine parallele und gleichzeitige Verarbeitung mehrerer Produkte erhöhen zu können.

Beispielsweise ist aus WO 2011/095998 A1 eine Vorrichtung zum Entfernen von Knochen eines Lebensmittels bekannt, bei welcher die Lage des Knochens eines Produkts mittels einer Röntgeneinrichtung bestimmt und eine Schneideinrichtung entsprechend der ermittelten Lage eingestellt wird. Dabei wird das Produkt nach dem Röntgenvorgang von einem ersten Förderer an einen weiteren Förderer übergeben, wobei durch ein Mapping zwischen der Röntgenaufnahme und einer weiteren, an dem weiteren Förderer erstellten Aufnahme sichergestellt werden kann, dass eine sich gegebenenfalls beim Übergang des Produkts von dem ersten Förderer zu dem weiteren Förderer verändernde Ausrichtung des Produkts erfasst und beim Schneiden berücksichtigt werden kann.

Ferner ist in der Veröffentlichung Meyn Poultry Processing: "Poultry Processing Solutions Wall-To-Wall", XP055773345 eine Geflügelschlachtfabrik veranschaulicht.

Der Betrieb und die Steuerung einer Verarbeitungslinie gestalten sich jedoch häufig äußerst komplex, da jede der mehreren Arbeitsstationen speziell bedient und eingestellt werden muss. Ferner ist bei der Steuerung auch zu beachten, dass eine bestimmte Einstellung einer Arbeitsstation aufgrund der schrittweisen Verarbeitung einen direkten Einfluss auf die Bearbeitung der Produkte an den weiteren, insbesondere an nachgelagerten, Arbeitsstationen ausüben kann. Dies erfordert ein hohes Maß an Expertise und Erfahrung eines Nutzers bei der Bedienung jeder der Arbeitsstationen und ein tiefgehendes Verständnis deren Zusammenwirkens in der Verarbeitungslinie, indem beispielsweise jede der Arbeitsstationen vor Betriebsstart genau auf die Eigenschaften der zu verarbeitenden Produkte einer folgenden Charge eingestellt werden muss. Insbesondere bei einem flexiblen Einsatz der Verarbeitungslinie zu einer Verarbeitung von Produkten verschiedener Art oder Sorte, für die eine unterschiedliche Verarbeitung und gegebenenfalls sogar unterschiedliche Bearbeitungsschritte erforderlich sein können, muss bei der Steuerung eine Vielzahl von Informationen berücksichtigt werden.

Ferner muss ein Nutzer eventuelle Fehleinstellungen, die zu einer mangelhaften Verarbeitung der Produkte führen können, auch während des Betriebs erkennen und diese beheben können. Dies setzt zunächst eine aufwendige und detaillierte Produktuntersuchung während oder nach der Verarbeitung voraus, um solche Mängel festzustellen. Ebenso muss ein Nutzer diese eventuell festgestellten Mängel an den verarbeiteten Produkten einer möglichen Fehleinstellung einer der Arbeitsstationen zuordnen sowie deren Einstellung unter Berücksichtigung des Einflusses auf weitere Arbeitsstationen optimal korrigieren können. Gerade bei komplexeren Problemen bzw. grundsätzlich aufgrund des Zusammenwirkens der Einstellungen der einzelnen Arbeitsstationen untereinander kann dies selbst bei erfahrenen Nutzern dazu führen, dass unterschiedliche Einstellungen verschiedener Arbeitsstationen mehrfach versuchsweise verändert werden müssen und das Resultat daraufhin erneut überprüft werden muss. Dadurch kann es jedoch zu erheblichen Betriebsstörungen und gegebenenfalls einem ungewünscht großen Produktausschuss kommen, wenn die Verarbeitung über einen längeren Zeitraum nicht optimal erfolgt.

Die Verarbeitung von Frischfleisch gestaltet sich ferner besonders herausfordernd, da neben der in der Regel notwendigen Vielzahl von präzisen Bearbeitungsschritten die Verarbeitung von Frischfleisch strengen Vorgaben unterliegt, wobei insbesondere strikte Hygienebestimmungen aber auch Temperaturvorgaben zu beachten sind, unter welchen die Verarbeitung erfolgen darf. Gerade die Verarbeitung von Frischfleisch entlang einer Verarbeitungslinie bedarf somit häufig eines hohen Maßes an Expertise und Erfahrung eines Nutzers, um jede der Arbeitsstationen optimal einstellen und die Einstellungen gegebenenfalls flexibel während des Betriebs unter Berücksichtigung der geltenden Vorgaben anpassen zu können.

Es ist daher eine Aufgabe der Erfindung, eine Möglichkeit zu schaffen, den Betrieb einer solchen Verarbeitungslinie zu vereinfachen und diesen möglichst optimal angepasst auf ein spezielles Produkt durchführen zu können, ohne dass es dazu einer besonderen Expertise oder langjährigen Erfahrung eines Nutzers bedarf.

Diese Aufgabe wird gelöst durch ein System mit den Merkmalen des Anspruchs 1.

Bei dem System kann ein Verfahren angewandt werden, bei welchem an zumindest einer Arbeitsstation wenigstens ein Parameter ermittelt, der an einer anderen Stelle der Verarbeitungslinie berücksichtigt wird.

Indem der an einer Arbeitsstation bestimmte Parameter an einer anderen Stelle der Verarbeitungslinie berücksichtigt wird, können eine Vernetzung der einzelnen Arbeitsstationen untereinander und somit ein intelligenter Betrieb der Verarbeitungslinie erreicht werden. So ist es beispielsweise möglich, den an einer Arbeitsstation bestimmten Parameter derart zu berücksichtigen, dass der folgende Bearbeitungsschritt in Abhängigkeit des bestimmten Parameters angepasst wird. Eine Information, die mittels des Parameters über das Produkt gewonnen wurde, kann somit zur Anpassung des folgenden Bearbeitungsschritts verwendet werden, sodass dieser speziell und optimal angepasst an das jeweilige Produkt durchgeführt werden kann.

Ebenso kann der Parameter auch rückwirkend berücksichtigt werden, sodass ein vorhergehender Bearbeitungsschritt aufgrund des an der Arbeitsstation bestimmten Parameters angepasst wird. Dadurch kann erreicht werden, dass eine mittels des Parameters erkannte nicht optimale Vorbearbeitung der Produkte für die folgenden Produkte angepasst wird, sodass diese die betreffende Arbeitsstation in wunschgemäßem Zustand erreichen. Der Parameter kann somit ein Maß der Resultate vorhergehender Bearbeitungsschritte angeben, um diese Bearbeitungsschritte während des Betriebs überprüfen und gegebenenfalls anpassen bzw. optimieren zu können.

Die Bestimmung wenigstens eines Parameters an einer Arbeitsstation und dessen Berücksichtigung an einer anderen Stelle der Verarbeitungslinie erlaubt eine besonders flexible Verarbeitung der Produkte, da die Berücksichtigung des Parameters nicht auf die betreffende Arbeitsstation beschränkt bleibt, sondern auch bei der weiteren bzw. sonstigen Bearbeitung der Produkte in Betracht gezogen wird. Grundsätzlich kann so die Verarbeitung sogar speziell auf einzelne Produkte, auch innerhalb einer Charge, ausgerichtet werden, da der Parameter für jedes Produkt bestimmt und für jedes Produkt speziell berücksichtigt werden kann.

Die vorstehend sowie in den folgenden Ausführungen beschriebenen Möglichkeiten, die sich durch die Berücksichtigung eines bestimmten Parameters an einer anderen Stelle der Verarbeitungslinie ergeben, sind nicht darauf beschränkt, dass mögliche Anpassungen oder Veränderungen allein aufgrund eines einzigen bestimmten Parameters erfolgen. Vielmehr kann auch eine Vielzahl von Parametern an einer Stelle der Verarbeitungslinie berücksichtigt werden, wobei die berücksichtigten Parameter grundsätzlich an einer oder an mehreren der Arbeitsstationen bestimmt worden sein können. Insbesondere ist es möglich, dass beispielsweise ein Bearbeitungsschritt in Abhängigkeit eines einzigen oder einer Vielzahl von Parametern angepasst wird, die an einer jeweiligen oder an mehreren Arbeitsstationen bestimmt wurden. Auch eine Berücksichtigung von Parametern, die an der betreffenden, den Bearbeitungsschritt ausführenden Arbeitsstation selbst bestimmt wurden, ist dabei nicht ausgeschlossen. Insofern können sämtliche vorstehend sowie im Folgenden beschriebenen Maßnahmen grundsätzlich sowohl in Abhängigkeit von einem als auch von einer Vielzahl von Parametern erfolgen.

Der bestimmte Parameter kann produktbezogen sein und eine Eigenschaft des Produkts betreffen, wie beispielsweise dessen Größe, Gewicht, Form oder Temperatur. Alternativ oder zusätzlich kann auch ein maschinenbezogener Parameter bestimmt werden, der insbesondere einen Wert einer Stellgröße der Arbeitsstation betreffen kann. Beispielsweise kann eine eingestellte Kühltemperatur an einer Arbeitsstation bestimmt werden, wenn die Produkte dort während der Bearbeitung gekühlt werden.

Insbesondere kann der bestimmte Parameter an einer anderen Arbeitsstation berücksichtigt werden, sodass beispielsweise eine Stellgröße einer vor- und/oder nachgelagerten Arbeitsstation verändert wird. Dabei ist es auch möglich, dass die Einstellungen verschiedener Arbeitsstationen gekoppelt sind, sodass eine parameterbedingte Änderung einer Stellgröße einer Arbeitsstation unmittelbar auch Anpassungen von Stellgrößen anderer Arbeitsstationen bedingt. Dies kann insbesondere dem komplexen Zusammenwirken der Arbeitsstationen untereinander bei der Verarbeitung der Produkte Rechnung tragen und sicherstellen, dass durch eine Einstellung einer der Arbeitsstationen nicht weitere Bearbeitungsschritte negativ beeinflusst werden.

Mögliche Ausführungsformen der Erfindung sind den Unteransprüchen, der Beschreibung und den Zeichnungen zu entnehmen. Nachstehende Ausführungen beziehen sich dabei grundsätzlich sowohl auf das offenbarte Verfahren als auch auf das darauffolgend erläuterte erfindungsgemäße System zur Verarbeitung von Produkten, das bevorzugt zur Durchführung des offenbarten Verfahrens ausgebildet ist. Dementsprechend beziehen sich auch die genannten Weiterbildungen der Erfindung sowohl auf das offenbarte Verfahren als auch das erfindungsgemäße System zur Verarbeitung von Produkten.

Der Parameter kann eine Eigenschaft des Produktes betreffen. So kann beispielsweise die Größe eines Produktes, dessen Gewicht, Form oder Temperatur bestimmt werden. Ebenfalls kann der Temperaturverlauf bezogen auf eine Oberfläche des Produktes bestimmt werden, um beispielsweise Abweichungen von einer konstanten Kühlung bzw. Temperatur zu erfassen. Auch die Oberflächenbeschaffenheit bzw. Oberflächenstruktur eines Produktes oder ein Gefriergrad einer Oberfläche kann bestimmt und bei der weiteren Verarbeitung berücksichtigt werden.

Ein produktbezogener Parameter kann auch eine Produkteigenschaft repräsentieren bzw. von einer Produkteigenschaft abgeleitet sein, sodass beispielsweise ein Wert einer bestimmten Art der Oberflächenbeschaffenheit oder Form eines Produktes zugeordnet werden kann. Es ist jedoch auch möglich, dass der Parameter als Tupel von Werten bestimmt wird, beispielsweise um einen Temperaturverlauf in bestimmten Abständen an der Oberfläche des Produktes entlang einer Richtung durch den Parameter angeben und an einer anderen Stelle der Verarbeitungslinie berücksichtigen zu können.

Der Parameter kann auch eine Stellgröße der einen Arbeitsstation betreffen. Eine Stellgröße bezeichnet dabei eine regel- bzw. einstellbare Größe der jeweiligen Arbeitsstation, sodass der Parameter insbesondere ein Wert sein kann, auf den die betreffende Stellgröße eingestellt werden kann bzw. auf den diese eingestellt ist.

Eine solche Stellgröße kann beispielsweise eine Maschinen-Grundeinstellung sein, wie deren Bandbreite, Anschläge im Sinne von Grenzwerten, sowohl hinsichtlich beweglicher Bauteile als auch sonstiger Stellgrößen wie beispielsweise einer Kühltemperatur, oder während der Bearbeitung aufgewandte Kräfte und deren Richtung. Ebenso können momentan eingestellte Sollwertvorgaben als Parameter bestimmt und bei der weiteren Verarbeitung der Produkte berücksichtigt werden.

Es kann vorgesehen sein, dass aufgrund des Parameters ein weiterer, nicht regelmäßig durchgeführter Bearbeitungsschritt erfolgt. Wird aufgrund des Parameters festgestellt, dass ein Produkt nicht wunschgemäß bearbeitet wurde bzw. das Produkt für eine weitere Verarbeitung nicht brauchbar ist oder dazu einer ursprünglich nicht vorgesehenen weiteren Bearbeitung bedarf, kann ein weiterer Bearbeitungsschritt zwischengeschaltet werden. Dazu kann das Produkt beispielsweise manuell behandelt oder automatisch über eine der Transportstrecke nebengelagerte Strecke an eine nicht der Verarbeitungslinie zugehörige Arbeitsstation geführt und dort speziell behandelt wird. Daraufhin kann das Produkt z.B. der Verarbeitungslinie an einer adäquaten Stelle wieder zugeführt oder prinzipiell für eine veränderte Verarbeitung vorgesehen und einem anderen Verarbeitungsprozess zugeführt werden.

Entsprechend kann der Parameter auch einem Auswerfemodus oder einem Auswerfealgorithmus zur Verfügung gestellt werden und als Input-Parameter eines solchen fungieren, aufgrund dessen Berechnung dann ein Aussortieren des Produkts bzw. ein Veranlassen einer gesonderten Bearbeitung erfolgt.

Bei einigen Ausführungsformen kann in Abhängigkeit des Parameters ein für einen Nutzer wahrnehmbares Signal erzeugt werden. Ein solches Signal kann optisch oder akustisch wahrnehmbar sein, sodass ein Nutzer auf dieses aufmerksam wird. Beispielsweise kann ein Alarm erzeugt werden, der auf die Notwendigkeit eines Eingriffs in den Betrieb und insbesondere einer Anpassung des Verarbeitungsprozesses hinweist. Dabei können solche Alarm- oder Warnsignale, beispielsweise in Form eines Alarmtons, einer Tonfolge oder einer aufleuchtenden Lampe, direkt an einer jeweiligen Arbeitsstation erzeugt werden, an der eine Anpassung bzw. ein Eingriff notwendig ist. Dies kann den Betrieb der Verarbeitungslinie dahingehend erleichtern, dass ein Nutzer über eine fehlerhaft eingestellte Arbeitsstation informiert wird und diese anpassen kann, ohne den Prozess selbst überprüfen und nicht optimal eingestellte Arbeitsstation selbstständig zuordnen oder ausfindig machen zu müssen. Grundsätzlich kann ein solches Signal auch durch ein externes Gerät oder System erzeugt werden, welches mit der Verarbeitungslinie verbunden ist, und beispielsweise in einem Kontrollraum ausgelöst werden.

Ebenso kann es vorgesehen sein, dass das für einen Nutzer wahrnehmbare Signal als eine Anzeige auf einem Bildschirm erzeugt wird, die beispielsweise einen konkreten Hinweis auf eine mangelhaft arbeitende Arbeitsstation oder eine direkte Anweisung bzw. Einstellempfehlung zu der vorzunehmenden Anpassung angeben kann. Der Nutzer kann somit eine direkte Information zu der Steuerung bzw. Anpassung der Verarbeitungslinie erhalten, sodass er lediglich mit der grundsätzlichen Einstellung und Bedienung der einzelnen Arbeitsstation vertraut sein muss. Dies kann beispielsweise an einer zentralen Steuerung erfolgen, die insbesondere in direkter Nähe zu dem Bildschirm angeordnet sein oder deren Bedienung direkt an dem Bildschirm erfolgen kann.

Durch ein solches Anzeigen direkter Anweisungen zur Steuerung der Verarbeitungslinie muss ein Nutzer ferner das Zusammenwirken der einzelnen Arbeitsstationen untereinander und somit die Auswirkungen einer Anpassung einer Stellgröße an einer Arbeitsstation auf den weiteren Verarbeitungsprozess nicht selbst im Blick haben, da dies bereits bei der Auswertung des Parameters berücksichtigt werden kann. Durch eine derartige Kommunikation mit dem Nutzer kann die Bedienung der Verarbeitungslinie somit erheblich erleichtert werden, sodass eine wunschgemäße Verarbeitung der Produkte bei einem möglichst dauerhaften Betrieb auch bei einer Bedienung der Anlage durch einen Nutzer ohne langjährige Erfahrung sichergestellt werden kann.

Es kann vorgesehen sein, dass der an der einen Arbeitsstation ermittelte Parameter bei der Verarbeitung der Produkte an zumindest einer anderen Arbeitsstation berücksichtigt wird. Diese Berücksichtigung kann dabei sowohl an einer in Bezug auf die Transportstrecke vorgelagerten Arbeitsstation als auch an einer in Bezug auf die Transportstrecke nachgelagerten Arbeitsstation erfolgen. Beispielsweise kann dazu in Abhängigkeit des Parameters ein Signal erzeugt werden, aufgrund dessen ein Nutzer eine Anpassung an einer der Arbeitsstationen vornimmt. Ebenso kann es vorgesehen sein, dass der Parameter automatisch ausgewertet wird und gegebenenfalls eine Stellgröße an einer anderen Arbeitsstation angepasst wird, um die Bearbeitung an dieser Arbeitsstation unter Berücksichtigung der mittels des Parameters gewonnenen Informationen anzupassen.

Erfolgt die Berücksichtigung des ermittelten Parameters an einer vorgelagerten Arbeitsstation, kann beispielsweise eine Anpassung erfolgen, wenn Produkte nicht optimal vorbereitet an der Arbeitsstation eintreffen, an der der Parameter bestimmt wird. Diese rückwirkende Berücksichtigung ermöglicht somit insbesondere einen optimierten Betrieb, indem durch den bestimmten Parameter eine Überprüfung der vorhergehenden Bearbeitungsschritte stattfindet und diese in optimierender Weise angepasst werden.

Die Berücksichtigung des Parameters an einer nachgelagerten Arbeitsstation ermöglicht ferner einen produktspezifischen Betrieb selbst innerhalb einer Charge. Zunächst können so grundsätzliche Einstellungen der nachgelagerten Arbeitsstation beispielsweise bei einem aufgrund des Parameters erfassten Chargenwechsel angepasst werden, um diese auf die in der jeweiligen Charge verarbeitete Produktsorte einzustellen. Ferner ist es jedoch auch möglich, den Parameter für jedes der zu verarbeitenden Produkte einzeln zu bestimmen, sodass der Parameter für das jeweilige, spezielle Produkt an einer nachgelagerten Arbeitsstation berücksichtigt werden und die Verarbeitung produktindividuell erfolgen kann. Dadurch kann eine besonders flexible Verarbeitung erreicht werden, bei der die speziellen Eigenschaften einzelner Produkte berücksichtigt werden.

Grundsätzlich ist es auch möglich, dass der Parameter an mehreren der anderen Arbeitsstationen berücksichtigt wird. Aufgrund des Parameters kann somit insbesondere sowohl an einer vorgelagerten Arbeitsstation als auch an einer nachgelagerten Arbeitsstation eine Anpassung erfolgen. Dadurch können nachfolgende Produkte sowohl optimal an die Arbeitsstation gelangen, an der der Parameter bestimmt wird, während auch eine produktspezifische Folgebearbeitung erfolgen kann.

Bei einer solchen Berücksichtigung des Parameters an einer anderen Arbeitsstation ist es jedoch nicht zwangsläufig notwendig, dass auf jede Parameterbestimmung unmittelbar eine Anpassung einer Arbeitsstation vorgenommen wird. Vielmehr kann der Parameter auch lediglich zu einer Überprüfung der Einstellungen der Arbeitsstationen dienen, wobei diese nicht angepasst werden, sofern der Parameter in einem vorgegebenen oder vorgebbaren Bereich liegt.

Bei einigen Ausführungsformen kann in Abhängigkeit des Parameters eine Anweisung für eine Anpassung zumindest einer Stellgröße zumindest einer anderen Arbeitsstation generiert werden. Diese Anweisung kann beispielsweise an einen Nutzer übermittelt werden, sodass er die notwendige Anpassung der Stellgröße vornehmen kann. Grundsätzlich ist es jedoch auch möglich, dass die Anweisung direkt an die betreffende Arbeitsstation übermittelt und die Anpassung automatisch vorgenommen wird. Durch eine solche direkte Übermittlung kann ein automatischer Betrieb erreicht werden, sodass ein Nutzer diesen lediglich überwachen muss, ohne selbst Anpassungen vornehmen oder mit den Einstellungen aller Arbeitsstationen vertraut sein zu müssen.

Neben einer Anweisung für eine Anpassung einer Stellgröße, die die Bearbeitung der Produkte an der betreffenden Arbeitsstation verändert, kann durch eine solche Anweisung auch ein Aussetzen der Bearbeitung an dieser Arbeitsstation erfolgen. Es kann folglich auch eine Anweisung dahingehend generiert werden, eine Stellgröße einer Arbeitsstation auf einen Nullwert einzustellen, sodass die Produkte durch diese Arbeitsstation geführt bzw. durchgeschleust werden, ohne dass eine Bearbeitung stattfindet. Auch solche Einstellungen können insbesondere produktindividuell erfolgen, beispielsweise wenn aufgrund des Parameters festgestellt wird, dass eine Bearbeitung eines bestimmten, einzelnen Produktes an einer der Arbeitsstationen nicht notwendig oder möglich ist.

Es kann vorgesehen sein, dass in Abhängigkeit des Parameters eine Anweisung für ein Aussetzen der Bearbeitung an einer anderen Arbeitsstation generiert wird. Diese Anweisung kann demnach konkret darauf abzielen, ein bestimmtes Produkt oder Produkte einer bestimmten Sorte an einer der Arbeitsstationen nicht zu bearbeiten. Dies kann, wie vorstehend erläutert, beispielsweise durch eine Anweisung für eine Einstellung einer Stellgröße auf einen Nullwert erfolgen, sodass die Produkte lediglich durch die Arbeitsstation transportiert bzw. durchgeschleust werden, ohne dass dort eine Bearbeitung erfolgt.

Wird die Bearbeitung an einer Arbeitsstation ausgesetzt, kann somit effektiv eine Weiterleitung des Produktes von einer Arbeitsstation an eine nicht direkt nachgelagerte Arbeitsstation, beispielsweise an die übernächste Arbeitsstation, erfolgen. Dabei muss das Aussetzen der Bearbeitung nicht zwangsläufig an einer der Arbeitsstation, an welcher der Parameter bestimmt wird, nachgelagerten oder unmittelbar nachgelagerten Arbeitsstation vorgesehen werden. Vielmehr kann aufgrund des Parameters die Bearbeitung an einer beliebigen Arbeitsstation gegebenenfalls ausgesetzt werden. Beispielsweise kann die Bearbeitung auch an einer vorgelagerten Arbeitsstation ausgesetzt werden, wenn erkannt wird, dass die Produkte auch ohne eine Bearbeitung an dieser optimal für den Bearbeitungsschritt an der Arbeitsstation, an welcher der Parameter bestimmt wird, vorbereitet werden.

Die Möglichkeit eines solchen Aussetzens der Bearbeitung an bestimmten Arbeitsstationen erlaubt eine flexible Anpassung der Verarbeitungslinie, sodass beispielsweise verschiedene Arten von Produkten verarbeitet und die Bearbeitungsschritte an das jeweilige Produkt angepasst werden können, ohne dass ein Umbau der Verarbeitungslinie notwendig ist. Prinzipiell können so auch bei einer mehrspurigen Verarbeitungslinie verschiedene Produkte gleichzeitig verarbeitet werden, wobei die Verarbeitung der Produkte in jeder Spur individuell auf das jeweilige Produkt abgestimmt werden kann, indem beispielsweise an einer der Arbeitsstationen in einer der Spuren die Bearbeitung ausgesetzt wird. Ferner ist es auch möglich, die Bearbeitung der Produkte innerhalb einer Charge und somit einer Produktsorte speziell auf das einzelne Produkt angepasst durchzuführen.

Bei einigen Ausführungsformen kann in Abhängigkeit des Parameters eine Anweisung für eine Anpassung der Transportstrecke generiert werden. Durch eine solche Anpassung der Transportstrecke kann ein bestimmtes Produkt beispielsweise an einer Arbeitsstation vorbeigeführt werden, indem es auf eine der Transportstrecke nebengelagerte Funktionsstrecke überführt wird. Entsprechend findet keine Bearbeitung des Produktes an dieser Arbeitsstation statt, wobei das Produkt gegebenenfalls in der Folge wieder auf die Transportstrecke zurückgeführt und an einer nachfolgenden Arbeitsstation weiterbearbeitet werden kann. Insbesondere, wenn die Produkte in schneller Folge durch die Arbeitsstationen geführt werden, um einen hohen Produktdurchsatz zu erreichen, kann ein solches Vorbeiführen für bestimmte Produkte vorgesehen werden, sodass keine zu einem Aussetzen der Bearbeitung führende Stellgrößenanpassung erfolgen muss, die für das unmittelbar nachfolgende Produkt wieder rückgängig gemacht werden müsste.

Eine Anpassung der Transportstrecke kann auch dazu führen, dass das Produkt, beispielsweise ebenfalls auf einer der Transportstrecke nebengelagerten Funktionsstrecke, an eine vorgelagerte Arbeitsstation zurückgeführt und dort erneut bearbeitet wird. Nicht zufriedenstellend bearbeitete Produkte können dann erneut bearbeitet werden, um das gewünschte Resultat zu erreichen, sodass eine gleichbleibend hohe Qualität der Verarbeitung gewährleistet werden kann. Ein solches Zurückführen an eine vorgelagerte Arbeitsstation kann dabei gegebenenfalls auch mehrfach erfolgen, bis die wunschgemäße Bearbeitung festgestellt wird.

Ferner ist es möglich, dass ein Produkt durch eine Anpassung der Transportstrecke in einen Entnahmeund/oder Kontrollbereich geführt wird, um dort von einem Nutzer überprüft zu werden. Dieser kann daraufhin das Produkt beispielsweise der Verarbeitungslinie an einem als notwendig erachteten Bearbeitungsschritt wieder zuführen oder das Produkt aufgrund mangelnder Qualität oder Verarbeitung für einen Ausschuss bestimmen. Ebenfalls ist es möglich, dass der Entnahme- und/oder Kontrollbereich direkt einem Ausschussbereich entspricht, sodass mangelhafte Produkte automatisch ausgesondert werden, ohne dass eine Überprüfung durch einen Nutzer erfolgt. Auch ein automatisches Zuführen der Produkte aus dem Entnahme- und/oder Kontrollbereich an einen gesonderten Verarbeitungsprozess kann vorgesehen werden, sodass für die Verarbeitung entlang der Verarbeitungslinie ungeeignet erscheinende Produkte dennoch anderweitig genutzt und bearbeitet werden können.

Grundsätzlich kann auch diese Anpassung der Transportstrecke automatisch erfolgen oder eine dahingehende Anweisung an einen Nutzer übermittelt werden, der die Produkte beispielsweise manuell an eine vorgelagerte Arbeitsstation zurückführt, an einer folgenden Arbeitsstation vorbeiführt oder für einen Ausschuss bestimmt.

Verallgemeinernd kann es somit grundsätzlich vorgesehen sein, dass in Abhängigkeit des Parameters ein Folgeschritt der Produktverarbeitung angepasst wird.

Bei einigen Ausführungsformen kann die generierte Anweisung unter Berücksichtigung vorhergehender, bereits ausgeführter Anweisungen angepasst werden. Demnach kann eine Anweisung, die aufgrund eines jeweiligen bestimmten Parameters generiert wird, optimiert werden, indem die Resultate bereits generierter und ausgeführter Anweisungen dabei berücksichtigt werden. Dazu kann die Generierung der Anweisung beispielsweise durch einen selbstlernenden Algorithmus erfolgen, der neben dem bestimmten Parameter auch Informationen darüber, ob eine aufgrund einer Anweisung vorgenommene Anpassung des Verarbeitungsprozesses zu einem gewünschten Resultat geführt hat, berücksichtigt.

So kann beispielsweise eine Stellgrößenanpassung bzw. die Anweisung zu einer solchen verändert werden, wenn trotz der üblicherweise aufgrund des Parameters vorgenommenen Anpassung nicht vollständig zufriedenstellende Resultate erkannt bzw. durch die Bestimmung des Parameters erfasst werden. Dies ermöglicht eine besonders flexible Steuerung und einen flexiblen Betrieb und Einsatz der Verarbeitungslinie, da aufgrund der rückwirkenden Berücksichtigung der Resultate von Anpassungen implizit auch äußere Bedingungen hinsichtlich der Umgebung der Verarbeitungslinie berücksichtigt werden können. Die Anpassung kann somit nicht nur individuell für aufeinanderfolgende Produkte erfolgen, sondern die diese Anpassung bestimmende Anweisung kann während des Betriebs beständig optimiert werden.

Es kann vorgesehen sein, dass die generierte Anweisung automatisch ausgeführt wird. Dadurch kann die Verarbeitung der Produkte vollständig automatisch durchgeführt werden, da beispielsweise eventuell notwendige Anpassungen von Stellgrößen oder der Transportstrecke automatisch vorgenommen werden können und der Betrieb durch einen Nutzer lediglich überwacht werden muss. Aufgrund der Vernetzung der Arbeitsstationen untereinander kann somit ein flexibler und produktspezifischer Betrieb erreicht werden, ohne dass ein Nutzer über eine besondere Expertise bezüglich der Steuerung der Verarbeitungslinie bzw. der einzelnen Arbeitsstationen verfügen muss.

Durch einen solchen automatischen Betrieb können eventuelle Anpassungen ferner unmittelbar erfolgen, ohne dass dazu eine Aktion des Nutzers notwendig ist. Die Produktverarbeitung kann daher selbst innerhalb einer Charge variieren und dabei individuell und unmittelbar an das jeweilige Produkt angepasst werden, was bei der Notwendigkeit einer Einstellung durch einen Nutzer häufig aufgrund der schnellen Aufeinanderfolge von Produkten an den Arbeitsstationen nicht möglich ist.

Insbesondere, wenn die generierte Anweisung vor der automatischen Ausführung unter Berücksichtigung vorangehender Anweisungen angepasst wird, kann eine intelligente und sich selbst optimierende Steuerung des Betriebs erfolgen. Durch eine solche Steuerung können grundsätzlich auch voreingestellte Grenzwerte für Stellgrößen von Arbeitsstationen, beispielsweise auf Basis von Trends und/oder Statistiken, verschoben werden, um automatisch, flexibel und optimal auf bestimmte Betriebssituationen oder unterschiedliche zu verarbeitende Produkte reagieren zu können.

Es kann vorgesehen sein, dass der automatische Betrieb bzw. die automatische Ausführung generierter Anweisungen von einem Nutzer freigeschaltet werden kann, sodass die Steuerung der Verarbeitungslinie in einer Grundeinstellung dem Nutzer obliegt. Gegebenenfalls kann dabei vorgesehen sein, dass die generierte Anweisung, die aufgrund vorhergehender Anweisungen angepasst sein kann, dem Nutzer in dieser Grundeinstellung mitgeteilt wird, beispielsweise indem diese Anweisung als Hinweis auf eine notwendige Anpassung auf einem Bildschirm angezeigt wird. Dadurch kann ein Nutzer frei entscheiden, inwiefern er eine Unterstützung bei der Steuerung der Verarbeitungslinie wünscht. Insbesondere kann auch eine Funktion einer während des Betriebs erfolgenden Anpassung bzw. Verschiebung von Grenzwerten vorher von einem Nutzer freizuschalten sein.

Bei einigen Ausführungsformen kann zumindest einer Arbeitsstation in Bezug auf die Transportstrecke eine Sortier- und/oder Ausrichtungseinrichtung vorgelagert sein, mittels derer die Produkte in Abhängigkeit des wenigstens einen Parameters gehandhabt werden. Allgemein kann in einer solchen Sortier- und/oder Ausrichtungseinrichtung eine Vor-Ausrichtung der Produkte erfolgen, um diese der nachgelagerten Arbeitsstation optimal ausgerichtet zuzuführen. Dies kann beispielsweise durch ein Drehen oder Kippen des Produktes erfolgen, um es vor der Bearbeitung in der nachgelagerten Arbeitsstation in die richtige Orientierung zu setzen. Ferner kann in der Handhabung der Produkte eine Spurverteilung liegen, sodass beispielsweise zwei Spuren möglichst gleichmäßig hinsichtlich des Gewichts der darauf geführten Produkte beladen werden oder die Produkte je nach ihrer Qualität auf verschiedene Spuren verteilt werden können.

Es kann vorgesehen sein, dass die Orientierung der Produkte mittels der Sortier- und/oder Ausrichtungseinrichtung verändert wird. Die Orientierung bezeichnet dabei insbesondere die Ausrichtung eines Produktes und kann beispielsweise durch Drehen oder Kippen des Produkts zu einer Seite korrigiert werden.

Durch die Veränderung der Orientierung kann das Produkt der nachgelagerten Arbeitsstation somit in der für den folgenden Bearbeitungsschritt optimalen Ausrichtung zugeführt werden. Grundsätzlich kann die Orientierung dabei vor und/oder nach einer Bearbeitung an einer Arbeitsstation verändert werden, wobei der Parameter jeweils vor der vorgenommenen Änderung ermittelt wurde.

Insbesondere kann eine solche Vor-Ausrichtung relevant sein, wenn die Produkte im Zuge der Verarbeitung an einer der Arbeitsstationen komprimiert oder geformt werden, sodass durch das Ausrichten ein wunschgemäßes Wirken der Kräfte erreicht werden kann. Ferner können die zu verarbeitenden Produkte, gerade Frischfleischprodukte, gegebenenfalls Knochen aufweisen. Durch eine korrekte Ausrichtung eines solchen Produkts kann beispielsweise verhindert werden, dass der Knochen während eines Komprimierens oder Formens bricht bzw. splittert. Auf eine solche Bearbeitung folgend kann gegebenenfalls eine weitere Änderung der Orientierung des Produktes erfolgen, um den weiteren Transport zu erleichtern oder das Produkt bereits für die Bearbeitung an einer folgenden Arbeitsstation auszurichten. Diese folgende Änderung der Orientierung kann dabei aufgrund desselben Parameters erfolgen, aufgrund dessen die Ausrichtung des Produktes vor dem Komprimieren verändert wurde, während es auch möglich ist, dass nach dem Komprimieren bzw. Formen ein weiterer Parameter bestimmt wird, aufgrund dessen die erneute Änderung erfolgt.

Grundsätzlich ist dabei auch möglich, dass eine solche Funktion zur Veränderung der Orientierung der Produkte vorgesehen, aber abschaltbar ist, sodass bei bestimmten Produkten oder Chargen grundsätzlich keine Änderung der Orientierung erfolgt. Ein solches Abschalten kann beispielsweise durch einen Nutzer oder automatisch aufgrund eines bestimmten Parameters erfolgen.

Es kann vorgesehen sein, dass die Produkte mittels der Sortier- und/oder Ausrichtungseinrichtung auf mehrere Spuren verteilt werden. Dabei können die Produkte beispielsweise so auf mehrere Spuren der Transportstrecke verteilt werden, dass jede der Spuren mit Produkten eines annähernd gleichen Gesamtgewichts beladen wird. Ferner kann eine Sortierung der Produkte nach deren Qualität erfolgen, indem Produkte höherer Qualität oder besser verarbeitete Produkte in einer bestimmten Spur weitertransportiert werden, während Produkte weniger hoher Qualität auf eine andere Spur verteilt werden. Dadurch kann bereits während der Verarbeitung eine Sortierung nach der Produktqualität erfolgen, sodass diese nach der Verarbeitung nicht mehr detailliert überprüft werden muss. Die verarbeiteten Produkte können somit in Abhängigkeit ihrer Qualität unmittelbar weiter gehandhabt oder verschiedene Abnehmer wunschgemäß beliefert werden. Ebenfalls kann es vorgesehen sein, die Produkte in Abhängigkeit ihres Volumens auf verschiedene Spuren zu verteilen bzw. zu sortieren, sodass die verarbeiteten Produkte von der Verarbeitungslinie bereits nach ihrem Volumen oder ihrer Größe sortiert zur weiteren Handhabung übergeben werden können.

Ferner können die Produkte mittels der Sortier- und/oder Ausrichtungseinrichtung auf neben der Transportstrecke angeordnete Funktionsstrecken verteilt werden, auf denen die Produkte beispielsweise an vorgelagerte Arbeitsstationen zurückgeführt, an einer folgenden Arbeitsstation vorbeigeführt oder in einen Entnahmeund/oder Kontrollbereich geführt werden können. Auch dies ermöglicht eine flexible Handhabung der Produkte, indem eine nicht zufriedenstellend erfolgte Bearbeitung nochmals durchgeführt, bestimmte Bearbeitungsschritte ausgelassen oder Produkte aussortiert werden können.

Eine solche Verteilung der Produkte auf mehrere Spuren kann beispielsweise durch ein seitliches Schieben, vertikal schwenkbare Wippen oder verstellbare Weichen erfolgen.

Es kann vorgesehen sein, dass die Produkte in zumindest einer der Spuren in einen Entnahme- und/oder Kontrollbereich geführt werden. Aufgrund des bestimmten Parameters als ungenügend bzw. für Folgeschritte ungeeignet erkannte Produkte können somit ausgeschleust und in dem Entnahme- und/oder Kontrollbereich von einem Nutzer überprüft werden. Dieser kann die Produkte gegebenenfalls der Verarbeitungslinie an einer gewünschten Stelle erneut zuführen oder unbrauchbare Produkte aussondern bzw. einem gesonderten Bearbeitungsprozess zuführen. Grundsätzlich kann es auch vorgesehen sein, dass der Entnahme- und/oder Kontrollbereich direkt als Ausschussbereich genutzt wird, ohne dass eine Kontrolle durch einen Nutzer erfolgt. Dies kann insbesondere bei einer optimierten und automatischen Steuerung vorgesehen sein, die auszusondernde Produkte zuverlässig erkennt und den Produktausschuss dabei dennoch minimiert.

Ferner kann es vorgesehen sein, dass die Produkte aus dem Entnahme- und/oder Kontrollbereich automatisch einem weiteren Prozess zugeführt werden, sodass diese Produkte anderweitig als auf der Verarbeitungslinie verarbeitet werden. Für eine Verarbeitung entlang der Verarbeitungslinie ungeeignete Produkte können somit dennoch genutzt und in einem gesonderten Prozess angepasst verarbeitet werden.

Bei einigen Ausführungsformen können die Produkte in zumindest einer der Spuren an zumindest einer der nachfolgenden Arbeitsstationen vorbeigeführt werden. Ein solches Vorbeiführen kann es beispielsweise ermöglichen, Produkte unterschiedlicher Sorte gleichzeitig und jeweils angepasst zu verarbeiten. So können dabei Produkte einer Sorte auf der Transportstrecke verbleiben und durch alle Arbeitsstationen geführt werden, wobei die Bearbeitung an diese Produkte und gegebenenfalls an jedes Produkt individuell angepasst durchgeführt wird. Produkte der anderen Sorte können jedoch in einer Spur an einer Arbeitsstation vorbeigeführt werden, wenn für diese ein bestimmter Bearbeitungsschritt nicht vorgesehen oder notwendig ist. Diese Produkte können somit an der betreffenden Arbeitsstation vorbeigeführt werden, ohne dass die Bearbeitung der darin bearbeiteten Produkte der anderen Sorte gestört wird. Gegebenenfalls kann bei einem Vorbeiführen von Produkten an einer Arbeitsstation die an dieser Arbeitsstation dann prinzipiell freie Spur auch für zu bearbeitende Produkte genutzt werden, um dadurch den Produktdurchsatz zu erhöhen.

Ferner können die an einer nachfolgenden Arbeitsstation vorbeigeführten Produkte grundsätzlich auch in einen Entnahme- und/oder Kontrollbereich geführt werden.

Bei einigen Ausführungsformen können die Produkte in zumindest einer der Spuren an eine der Sortierund/oder Ausrichtungseinrichtung vorgelagerte Arbeitsstation oder eine der Verarbeitungslinie vorgelagerte Funktionseinheit zurückgeführt werden. Durch eine solche Rückführung an eine vorgelagerte Arbeitsstation kann beispielsweise eine nicht zufriedenstellende Bearbeitung korrigiert werden. Gegebenenfalls kann die Rückführung dabei auch mehrfach erfolgen, wenn trotz der erneut erfolgten Bearbeitung anhand des Parameters festgestellt wird, dass wiederum kein zufriedenstellendes Resultat erzielt werden konnte. Ferner kann der Parameter, aufgrund dessen die Rückführung des Produktes an eine vorgelagerte Arbeitsstation veranlasst wird, zusätzlich eine Anpassung einer Stellgröße dieser Arbeitsstation bedingen, um eine verbesserte Bearbeitung zu erreichen.

Bei einigen Ausführungsformen können zumindest eine der Verarbeitungslinie vorgelagerte Funktionseinheit und/oder zumindest eine der Verarbeitungslinie nachgelagerte Funktionseinheit vorgesehen sein, wobei eine Stellgröße der jeweiligen Funktionseinheit in Abhängigkeit des wenigstens einen Parameters angepasst wird und/oder wobei an der jeweiligen Funktionseinheit wenigstens ein weiterer Parameter bestimmt wird, der an zumindest einer Stelle der Verarbeitungslinie berücksichtigt wird.

Derartige der Verarbeitungslinie vor- bzw. nachgelagerte Funktionseinheiten können beispielsweise ein Produktlager und eine Verpackungsmaschine sein, an die Produkte nach der Verarbeitung, gegebenenfalls automatisch, übergeben werden. Diese Funktionseinheiten können dabei in Abhängigkeit eines an einer Arbeitsstation ermittelten Parameters angepasst werden, indem zum Beispiel die Kühltemperatur eines Produktlagers verändert wird, wenn eine solche Änderung aufgrund des ermittelten Parameters zweckmäßig erscheint. Ebenfalls kann an den Funktionseinheiten ein weiterer Parameter ermittelt werden, der bei der Steuerung der Verarbeitungslinie berücksichtigt wird. Es erfolgt somit eine Kommunikation über die Verarbeitungslinie hinaus, indem auch vor- und nachgelagerte Funktionseinheiten in die Vernetzung mit einbezogen werden und deren Zustand berücksichtigt wird. Durch diese zusätzlichen Informationen kann der Betrieb weiter optimiert werden.

Insbesondere können durch die vor- und nachgelagerten Funktionseinheiten Informationen über den Chargenstatus, wie beispielsweise das voraussichtliche Ende der Verarbeitung einer gesamten Charge oder die zur Verarbeitung einer Charge benötigte Zeit ermittelt werden. So kann das Ende des Betriebs bzw. der Verarbeitung einer Charge durch eine bestimmte Anzahl von verarbeiteten und verpackten Produkten vorgegeben sein, wobei der Status der Verarbeitung durch die Anzahl der bereits befüllten Verpackungen bzw. der an eine nachgelagerte Verpackungsmaschine übergebenen fertig verarbeiteten Produkten bestimmt werden kann.

Es kann vorgesehen sein, dass die Produkte in einem letzten Schritt an der Verarbeitungslinie in Scheiben geschnitten und aus diesen Portionen gebildet werden, die an eine Verpackungsmaschine übergeben werden. Eine Kommunikation der Verpackungsmaschine mit der Verarbeitungslinie kann dabei beispielsweise derart erfolgen, dass aufgrund der Anzahl an bereits verpackten Portionen, die an der Verpackungsmaschine ermittelt werden kann, die Scheibendicke innerhalb eines Toleranzbereichs angepasst wird. So kann eine gewünschte Portionszahl gegebenenfalls noch mit den sich bereits innerhalb der Verarbeitungslinie befindenden Produkten erreicht werden und die Produktzuführung aus dem vorgelagerten Produktlager kann unterbrochen werden. Durch eine solche Miteinbeziehung der Verpackungsmaschine kann insbesondere verhindert werden, dass nach einem Erreichen der gewünschten Anzahl von verpackten Portionen große Produktreste in der Verarbeitungslinie verbleiben und möglicherweise ausgesondert werden müssen. Durch das möglichst vollständige Aufbrauchen der Produkte in der Verarbeitungslinie können auch mögliche Umrüstungen für Folgechargen oder das Reinigen der Verarbeitungslinie erleichtert und beschleunigt werden.

Ferner können aufgrund des an einer Arbeitsstation ermittelten Parameters oder des erfassten Chargenstatus auch die Vorräte überprüft oder Umrüstungen bzw. Sortierungen in einem Produktlager für Folgechargen vorgenommen werden. Auch ein anstehendes Wiederauffüllen des Lagers oder ein anstehender Wechsel einer Materialrolle einer Verpackungsmaschine können gegebenenfalls an den Arbeitsstationen oder beim Transport berücksichtigt werden, beispielsweise indem dieser kurzfristig verlangsamt wird, um einen solchen Wechsel bei dennoch kontinuierlichem Betrieb zu ermöglichen.

Es kann vorgesehen sein, dass der wenigstens eine an einer jeweiligen Funktionseinheit ermittelte weitere Parameter in gleicher Weise wie der an der Arbeitsstation ermittelte wenigstens eine Parameter an einer Stelle der Verarbeitungslinie berücksichtigt wird. Dementsprechend kann aufgrund des weiteren Parameters ebenfalls ein für einen Nutzer wahrnehmbares Signal erzeugt werden, insbesondere auch ein Warnsignal, und es können direkte Anweisungen oder Hinweise an einen Nutzer übermittelt werden. Ebenso können grundsätzlich auch automatisch ausgeführte Steuersignale in Abhängigkeit des weiteren Parameters generiert werden. Auch eine Anpassung der Transportstrecke oder eine Veränderung der Orientierung der Produkte kann aufgrund einer Berücksichtigung eines an einer vor- und/oder nachgelagerten Funktionseinheit ermittelten weiteren Parameters erfolgen. Ebenfalls ist es möglich, einen oder mehrere an einer vor- und/oder nachgelagerten Funktionseinheit ermittelten weiteren Parameter an einer Stelle der Verarbeitungslinie gemeinsam mit Parametern, die an anderen Stellen der Verarbeitungslinie ermittelt wurden, zu berücksichtigen. Mögliche Veränderungen des Verarbeitungsprozesses können somit auch aufgrund von Kombinationen unterschiedlicher bzw. an verschiedenen Stellen bestimmter Parameter vorgenommen werden.

Bei einigen Ausführungsformen kann ein der Verarbeitungslinie in Bezug auf die Transportstrecke vorgelagertes Produktlager vorgesehen sein, in dem die Produkte gelagert werden, wobei eine Stellgröße des Produktlagers, insbesondere eine Kühltemperatur, unter Berücksichtigung des wenigstens einen Parameters angepasst wird und/oder wobei an dem Produktlager wenigstens ein weiterer Parameter, insbesondere eine Kühltemperatur, bestimmt wird, der an einer Stelle der Verarbeitungslinie berücksichtigt wird. Beispielsweise kann die Kühltemperatur eines Produktlagers angepasst werden, wenn der ermittelte Parameter die Notwendigkeit einer stärkeren Kühlung der Produkte nahelegt. Dies kann beispielsweise erfolgen, wenn die Produkte während der Verarbeitung an einer der Arbeitsstationen geschnitten werden und starke Schwankungen der Schneidkräfte registriert werden, die gegebenenfalls eine ungewünschte Variation in der Schnittqualität zur Folge haben können.

Ferner kann die Kühltemperatur des Produktlagers auch an der Verarbeitungslinie berücksichtigt werden, indem die Bearbeitungsschritte in Abhängigkeit dieser Kühltemperatur angepasst werden. Insbesondere kann es vorgesehen sein, dass während der Verarbeitung eine Zwischenkühlung der Produkte erfolgt, wobei die Verweildauer der Produkte in dieser Zwischenkühlung unter Berücksichtigung der Kühltemperatur im Produktlager eingestellt werden kann.

Bei einigen Ausführungsformen kann eine der Verarbeitungslinie in Bezug auf die Transportstrecke nachgelagerte Verpackungsmaschine, insbesondere eine Tiefziehverpackungsmaschine, vorgesehen sein, mittels derer die verarbeiteten Produkte verpackt werden, wobei zumindest eine Stellgröße der Verpackungsmaschine in Abhängigkeit des wenigstens einen Parameters angepasst wird und/oder wobei an der Verpackungsmaschine wenigstens ein weiterer Parameter bestimmt wird, der an zumindest einer Stelle der Verarbeitungslinie berücksichtigt wird.

Die verarbeiteten Produkte können somit unmittelbar an eine Verpackungsmaschine übergeben werden, wobei die Produkte sowohl direkt auf vorgesehene Verpackungsplätze, beispielsweise in eine Folie eingezogene Mulden oder bereitgestellte Trays, ein- bzw. aufgelegt werden können. Ebenso kann es vorgesehen sein, dass die Produkte mittels weiterer Transporteinrichtungen, insbesondere sogenannter Einleger, an die Verpackungsmaschine transportiert und an diese übergeben werden.

Beispielsweise kann an der Verpackungsmaschine die Dimension bzw. Größe der Verpackungsplätze bestimmt und an eine der Arbeitsstationen übermittelt werden, die während der Bearbeitung auf die Größe der Produkte einwirkt oder diese formt. Dabei kann eine Stellgröße dieser Arbeitsstation so eingestellt werden, dass die Produkte ausreichend komprimiert werden, um ein Verpacken der fertig verarbeiteten Produkte in den vorgesehenen Verpackungsplätzen zu ermöglichen. Insbesondere kann es dabei vorgesehen sein, dass die Produkte in einem abschließenden Schritt der Verarbeitung in Scheiben geschnitten werden, wobei Portionen dieser Scheiben an die Verpackungsmaschine übergeben werden. Durch ein Komprimieren der Produkte vor dem Schneiden kann somit auf die Scheibengröße eingewirkt werden, sodass sichergestellt werden kann, dass die erstellten Portionen verpackt werden können. Ferner kann an einer derartigen Arbeitsstation auch ein gezieltes Formen der aufzuschneidenden Produkte erfolgen, beispielsweise um darauffolgend erstellten Scheiben eine gewünschte Kontur zu geben oder diese speziell an die Form der jeweiligen Verpackung anzupassen.

Umgekehrt kann beispielsweise die Größe der Produkte an einer der Arbeitsstationen der Verarbeitungslinie bestimmt und an die Verpackungsmaschine übermittelt werden, die entsprechend die Dimension der Mulden oder die Auswahl der Trays flexibel an die zu erwartende Größe der verarbeiteten Produkte anpassen kann. Dies kann es gegebenenfalls sogar ermöglichen, die Größe der Verpackungen individuell an ein spezielles Produkt innerhalb einer Charge anzupassen, um beispielsweise Verpackungsmaterial sparen zu können. Ferner können auch Evakuierungs- und/oder Begasungsprozesse während eines Ziehens von Mulden in einer Folienbahn an die Portionsgröße bzw. an das zu erwartende Füllvolumen einer Packung angepasst werden.

Bei einigen Ausführungsformen kann eine Kennzeichnungseinrichtung vorgesehen sein, in der die Produkte gekennzeichnet werden, wobei die Verarbeitungslinie eine Identifikationseinrichtung umfassen kann, in der die gekennzeichneten Produkte erfasst werden.

Insbesondere kann eine solche Kennzeichnungseinrichtung der Verarbeitungslinie vorgelagert sein, sodass Produkte gegebenenfalls auch bereits gekennzeichnet in ein der Verarbeitungslinie vorgelagertes Produktlager gelangen können. In dieser Kennzeichnungseinrichtung können den Produkten beispielsweise Barcodes aufgebracht oder ein Chip eingesetzt werden, sodass eine spätere und eindeutige Identifikation des Produktes in einer Identifikationseinrichtung möglich ist. Dadurch kann automatisch und unmittelbar eine Vielzahl von Informationen über das jeweilige Produkt bereitgestellt und die Verarbeitung speziell auf dieses Produkt ausgerichtet werden. Diese Informationen können beispielsweise konkrete Produktmerkmale wie die Sorte, das Gewicht, die Produktmaße oder die Strukturierung des Produkts betreffen.

Dazu kann die Identifikationseinrichtung als gesonderte Einrichtung und insbesondere zu Beginn der Transportstrecke vorgesehen sein, sodass die durch die Identifikation des Produktes zur Verfügung stehenden Informationen während der gesamten Verarbeitung genutzt werden können und jeder der Bearbeitungsschritte unter Berücksichtigung dieser Informationen durchgeführt werden kann. Ebenfalls ist es möglich, dass die Identifikationseinrichtung als Einheit in eine oder mehrere der Arbeitsstationen oder eine sonstige an der Verarbeitungslinie angeordnete Einrichtung integriert ist.

Es kann vorgesehen sein, dass zumindest eine Stellgröße zumindest einer Arbeitsstation in Abhängigkeit des erfassten Produktes angepasst wird. Durch die Identifikation des Produkts kann somit die Arbeitsstation speziell auf das erfasste Produkt eingestellt und angepasst werden, wobei die durch die Identifikation verfügbaren Informationen über die Eigenschaften des jeweiligen Produktes genutzt werden. Insbesondere kann es auch vorgesehen sein, dass Stellgrößen mehrerer oder sogar aller Arbeitsstationen in Abhängigkeit des erfassten Produktes gleichzeitig angepasst werden, beispielsweise, um die Arbeitsstationen auf die Grundeinstellungen für eine bestimmte Produktsorte zu bringen.

Bei einigen Ausführungsformen kann zumindest einer Arbeitsstation in Bezug auf die Transportstrecke eine Untersuchungseinrichtung vorgelagert sein, mittels derer zumindest ein Produktmerkmal bestimmt wird. Dieses Produktmerkmal kann gewissermaßen als produktbezogener Parameter verstanden werden und sich beispielsweise auf das Gewicht, die Größe, die Qualität, die Lage bzw. Orientierung, die Temperatur, den Fettoder Fleischanteil eines Produktes oder dessen Oberflächenbeschaffenheit beziehen.

Es kann vorgesehen sein, dass das Produktmerkmal bei der Bearbeitung der Produkte an zumindest einer der Untersuchungseinrichtung nachgelagerten Arbeitsstation berücksichtigt wird. Dementsprechend kann auch gesondert von einer Arbeitsstation eine Einrichtung vorgesehen sein, die speziell dem Ermitteln von Produktmerkmalen dient, wobei auch diese bei der Bearbeitung der Produkte berücksichtigt werden können. Durch eine Berücksichtigung des Produktmerkmals in einer nachgelagerten Arbeitsstation kann diese optimal auf das zu bearbeitende Produkt eingestellt werden.

Ferner kann es vorgesehen sein, dass das Produktmerkmal bei der Bearbeitung der Produkte an zumindest einer der Untersuchungseinrichtung vorgelagerten Arbeitsstation berücksichtigt wird. Das Produktmerkmal kann somit rückwirkend berücksichtigt werden und insbesondere dazu dienen, das Resultat einer Bearbeitung durch eine Arbeitsstation zu überprüfen und zurückzumelden. Durch eine solche Überprüfung der Resultate der Bearbeitung kann gegebenenfalls auch eine eventuell vorgenommene Anpassung von Stellgrößen der betreffenden Arbeitsstation aufgrund eines bestimmten Parameters verändert und optimiert werden, indem sowohl der bestimmte Parameter als auch das nachfolgend ermittelte Produktmerkmal einem selbstlernenden Algorithmus zur Steuerung der Verarbeitungslinie zur Verfügung gestellt werden. Dadurch kann ein sich beständig optimierender Betrieb der Verarbeitungslinie ermöglicht werden.

Es kann vorgesehen sein, dass das zumindest eine Produktmerkmal in gleicher Weise wie der an der Arbeitsstation ermittelte wenigstens eine Parameter an einer anderen Stelle der Verarbeitungslinie berücksichtigt wird und/oder dass das zumindest eine Produktmerkmal in gleicher Weise wie ein an einer der Verarbeitungslinie vorgelagerten oder nachgelagerten Funktionseinheit ermittelter weiterer Parameter an einer anderen Stelle der Verarbeitungslinie berücksichtigt wird.

Auch aufgrund des Produktmerkmals kann somit grundsätzlich ein für einen Nutzer wahrnehmbares Signal erzeugt werden, das beispielsweise ein akustisch oder optisch wahrnehmbares Warn- bzw. Alarmsignal oder eine auf einem Bildschirm angezeigte Anweisung sein kann, wobei aufgrund des Produktmerkmals auch automatisch umgesetzte Anweisungen für Anpassungen von Stellgrößen von Arbeitsstationen generiert werden können. Ebenfalls kann aufgrund des Produktmerkmals eine Anpassung der Transportstrecke erfolgen, sodass bestimmte Produkte beispielsweise an einer nachfolgenden Arbeitsstation vorbeigeführt, zu einer vorgelagerten Arbeitsstation zurückgeführt oder in einen Entnahme- und/oder Kontrollbereich geführt werden können, wobei auch diese Anweisung sowohl an einen Nutzer übermittelt als auch automatisch ausgeführt werden kann.

Ferner kann aufgrund des Produktmerkmals auch die Bearbeitung an zumindest einer der Arbeitsstationen ausgesetzt werden, wenn für dieses Produkt oder gegebenenfalls eine Reihe von aufeinanderfolgenden Produkten ein bestimmter Bearbeitungsschritt nicht erforderlich ist.

Bei einigen Ausführungsformen kann eine der Arbeitsstationen der Verarbeitungslinie eine Kühleinrichtung sein, an der die Produkte bei einer vorgegebenen oder vorgebbaren Kühltemperatur gekühlt werden oder an der die Produkte auf eine vorgegebene oder vorgebbare Temperatur gekühlt werden. Grundsätzlich kann eine solche Kühleinrichtung eine Vorkühlung und/oder eine Zwischenkühlung umfassen, wobei die Kühleinrichtung allgemein der Temperierung der Produkte dient, um diese für einen folgenden Bearbeitungsschritt bzw. die folgenden Bearbeitungsschritte vorzubereiten. Dabei können die Kühltemperatur der Kühleinrichtung und die Verweildauer der Produkte an dieser Einrichtung festgelegt sein bzw. festgelegt werden, während es auch möglich ist, die Produkte so lange an der Kühleinrichtung zu kühlen, bis diese eine gewünschte Temperatur aufweisen, sodass die Kühlung unter Berücksichtigung der jeweiligen Produkttemperatur erfolgen und daran angepasst werden kann. Es können auch mehrere Kühleinrichtungen vorgesehen sein, die vor oder nach weiteren Arbeitsstationen angeordnet sein können, während auch die weiteren Arbeitsstationen grundsätzlich Mittel zum Kühlen der Produkte aufweisen können.

Es kann vorgesehen sein, dass an der Kühleinrichtung die Kühltemperatur und/oder die Verweilzeit als Parameter ermittelt werden. Durch diese Ermittlung können die Kühltemperatur und/oder die Verweilzeit somit an einer anderen Stelle der Verarbeitungslinie berücksichtigt werden. Die Verweilzeit gibt dabei insbesondere die Dauer an, während derer sich die Produkte in der Kühleinrichtung befinden und eine Kühlung erfolgt. Bei einer konstanten Bewegung der Produkte entlang der Transportstrecke kann diese durch die Transportgeschwindigkeit vorgegeben sein und somit der Durchlaufzeit der Produkte durch die Kühleinrichtung entsprechen. Es ist jedoch auch möglich, die Produkte in der Kühleinrichtung anzuhalten, um eine wunschgemäße Kühlung zu erreichen.

Es kann vorgesehen sein, dass die Kühltemperatur und/oder die Verweilzeit in Abhängigkeit zumindest eines an einer anderen Arbeitsstation bestimmten Parameters angepasst werden. Beispielsweise kann die Verweilzeit der Produkte an der Kühleinrichtung erhöht werden, wenn aufgrund des an einer anderen Arbeitsstation ermittelten Parameters festgestellt wird, dass die Produkte diese Arbeitsstation nicht ausreichend gekühlt erreichen. Ist beispielsweise eine Arbeitsstation vorgesehen, an der die Produkte in Scheiben geschnitten werden, können die während des Schneidens auftretenden Schneidkräfte zu einer Überprüfung einer ausreichenden Kühlung herangezogen werden.

Bei einigen Ausführungsformen kann eine der Arbeitsstationen der Verarbeitungslinie eine Press- und/oder Formeinrichtung sein, an der die Produkte komprimiert und/oder geformt werden. An einer solchen Arbeitsstation können die Produkte insbesondere auch geformt werden, wobei die Maße des Produktes gezielt verändert werden. An einer solchen Station können Unregelmäßigkeiten in der Form des Produktes ausgeglichen werden, sodass die vollständig verarbeiteten Produkte eine gleichmäßige Größe und Qualität sowie ein möglichst gleiches Gewicht aufweisen.

Es kann vorgesehen sein, dass an der Press- und/oder Formeinrichtung als Parameter die Temperatur der Produkte und/oder während des Pressens auftretende Kräfte, insbesondere Press- und/oder Rückstellkräfte, und/oder Rückstellwege ermittelt werden. Dabei kann die Temperatur vor, während und/oder nach dem Pressen gemessen werden und die jeweiligen Messwerte können an einer anderen Stelle der Verarbeitungslinie berücksichtigt werden. Grundsätzlich ist es auch möglich, lediglich Teile dieser Messpunkte vorzusehen oder Teile dieser Messgrößen zu ermitteln und zu berücksichtigen. Insbesondere können die Presskräfte beispielsweise dazu verwendet werden, eine Kühltemperatur einer der Presseinrichtung vorgelagerten Kühleinrichtung anzupassen, wenn beispielsweise ungewünscht große Presskräfte nötig sind, um eine gewünschte Komprimierung zu erreichen.

Ferner kann an der Press- und/oder Formstation das Volumen der Produkte bestimmt werden. Dazu können insbesondere die Positionen von Elementen überprüft werden, die die Produkte komprimieren und/oder formen, und das Produktvolumen kann aus deren Positionen ermittelt werden. Alternativ oder zusätzlich können auch an diesen Elementen wirkende Kräfte wie Press- oder Rückstellkräfte zur Volumenbestimmung herangezogen werden.

Es kann vorgesehen sein, dass eine Stellgröße der Press- und/oder Formeinrichtung in Abhängigkeit eines an einer anderen Arbeitsstation ermittelten Parameters angepasst wird. Beispielsweise kann an einer der Pressund/oder Formeinrichtung vorgelagerten Arbeitsstation das Vorhandensein bzw. die Lage eines Knochens in einem Frischfleischprodukt ermittelt werden, sodass die Presskräfte bzw. deren Richtung in der Pressund/oder Formeinrichtung daran angepasst eingestellt werden können, um ein Brechen bzw. Splittern des Knochens zu vermeiden.

Bei einigen Ausführungsformen kann eine der Arbeitsstationen eine Schneidvorrichtung sein, insbesondere ein automatischer Slicer, an der die Produkte in Scheiben geschnitten werden. Die Scheibendicke kann dabei variabel einstellbar sein, sodass auch dickere Stücke, beispielsweise dickere Stücke eines Frischfleischprodukts, als Scheiben bezeichnet werden. Ebenfalls kann es vorgesehen sein, dass die Produkte mittels der Schneidvorrichtung in regelmäßige oder unregelmäßige Stücke zerteilt oder zerhackt werden. Diese alternative Möglichkeit kann grundsätzlich auch dann immer vorgesehen sein, wenn im Folgenden ein Schneiden und insbesondere ein Schneiden in Scheiben beschrieben und die alternative Möglichkeit nicht explizit erwähnt ist.

In der Folge können aus diesen geschnittenen Scheiben Portionen gebildet werden, die aus zumindest einer Scheibe bestehen. Insbesondere kann die Produktverarbeitung entlang der Verarbeitungslinie mit einem solchen Bilden von Portionen abgeschlossen werden und die Portionen können an eine nachgelagerte Funktionseinheit, insbesondere eine Verpackungsmaschine, übergeben werden.

Es kann vorgesehen sein, dass in der Schneidvorrichtung als Parameter die Temperatur der Produkte und/oder der Gefriergrad der Produkte und/oder die Schneidkräfte bestimmt werden. Dabei kann die Bestimmung der Temperatur und/oder des Gefriergrades in einem Zuführbereich der Schneidvorrichtung, in einem direkten Bereich der Schneidvorrichtung unmittelbar vor oder hinter dem die Produkte in Scheiben schneidenden Messer sowie in einem in Bezug auf die Transportstrecke hinter dem Messer vorgesehenen Portionierbereich erfolgen, wobei sowohl alle dieser Messpunkte als auch lediglich Teile davon vorgesehen sein können. Entsprechend ist es möglich, die Temperatur und den Gefriergrad an der Schnittfläche vor dem Schneiden, an fallenden Scheiben sowie an der abgetrennten Scheibe, unmittelbar nach dem Schneiden oder im weiteren Verlauf der Handhabung, zu messen.

Auch diese Parameter können somit an den anderen Arbeitsstationen der Verarbeitungslinie berücksichtigt werden. Insbesondere kann beispielsweise die Kühltemperatur einer Kühleinrichtung oder einer die Produkte ebenfalls kühlenden Press- und/oder Formeinrichtung aufgrund der ermittelten Schneidkräfte angepasst werden.

Es kann vorgesehen sein, dass zumindest eine Stellgröße der Schneidvorrichtung in Abhängigkeit eines an einer anderen Arbeitsstation ermittelten Parameters angepasst wird. Beispielsweise können in einer Pressund/oder Formeinrichtung die Oberflächenbeschaffenheit oder der Temperaturverlauf entlang eines Produktes bestimmt werden, wobei der Aufschneidevorgang und insbesondere die Schneidkräfte oder der Schneidwinkel in Abhängigkeit dieser Parameter angepasst werden können.

Die Erfindung betrifft ein System zur Verarbeitung von aufzuschneidenden und/oder zu zerteilenden Lebensmittelprodukten, insbesondere zur Verarbeitung von Frischfleisch und/oder von Bacon, mit einer Verarbeitungslinie, bevorzugt zur Durchführung eines Verfahrens wie hierin offenbart, die mehrere Arbeitsstationen und eine ein- oder mehrspurige Transporteinrichtung zum Transport der Produkte entlang einer Transportstrecke von Arbeitsstation zu Arbeitsstation umfasst. Dabei weist zumindest eine der Arbeitsstationen ein Mittel zur Bestimmung wenigstens eines Parameters auf, wobei das Mittel mit einer Auswerte- und Steuereinrichtung verbunden ist, die dazu ausgebildet ist, in Abhängigkeit des wenigstens einen Parameters ein Steuersignal zu erzeugen.

Der bestimmte Parameter wird somit an die Auswerte- und Steuereinrichtung übermittelt, welche diesen auswertet und in Abhängigkeit dessen ein Steuersignal erzeugt. Grundsätzlich kann das erzeugte Steuersignal auch von mehreren Parametern abhängen und somit unter Berücksichtigung einer Vielzahl von Parametern bzw. Informationen angepasst werden. Dieses Signal kann an eine weitere Einrichtung übermittelt werden, sodass beispielsweise ein Alarm ausgelöst werden kann, um einen Nutzer auf eine Fehlfunktion oder eine fehlerhafte Einstellung eines Teils der Verarbeitungslinie aufmerksam zu machen. Je nach der das Signal empfangenden Einrichtung kann auch eine Anweisung oder ein optisch wahrnehmbarer Hinweis erzeugt werden, sodass ein Nutzer über eine notwendige Anpassung einer der Arbeitsstationen informiert werden kann. Gegebenenfalls kann das Steuersignal auch direkt an eine oder mehrere Arbeitsstationen übermittelt werden und eine automatische Anpassung deren Einstellung erfolgen.

Das Steuersignal kann somit direkt oder indirekt, durch Benachrichtigung bzw. Aktivierung eines Nutzers, in die Bearbeitung der Produkte einfließen und eine Anpassung bewirken. Der Betrieb der Verarbeitungslinie kann dadurch deutlich vereinfacht und flexibler gestaltet werden, da das erzeugte Steuerungssignal Möglichkeiten bietet, einen optimalen Betrieb auch bei einer Bedienung durch einen Nutzer ohne langjährige Erfahrung in der Steuerung und Einstellung der Arbeitsstationen zu erreichen.

Der bestimmte Parameter kann dabei sowohl produktbezogen sein und ein Merkmal des Produktes betreffen als auch einen Wert einer Stellgröße der jeweiligen Arbeitsstation angeben.

Als Mittel zur Bestimmung des Parameters können beispielsweise Wärmebildkameras, Scanner, Waagen, Laserthermometer, eine Kamera zur Oberflächenanalyse, Bilderkennungsprogramme oder Röntgengeräte vorgesehen sein, mittels derer insbesondere die Lage eines Knochens in einem Frischfleischprodukt erfasst werden kann. Ferner können während der Verarbeitung Kraftverlaufsmessungen erfolgen, wodurch zum Beispiel in einer Einrichtung, in der die Produkte während der Bearbeitung komprimiert bzw. geformt werden, brechende oder splitternde Knochen erkannt werden können.

Bei einigen Ausführungsformen kann die Auswerte- und Steuereinrichtung mit einer Warneinrichtung verbunden sein, die dazu ausgebildet ist, in Abhängigkeit des Steuersignals einen Warnhinweis zu erzeugen. Dieser Warnhinweis kann beispielsweise optisch oder akustisch durch einen Nutzer wahrnehmbar und prinzipiell als ein bloßes Warnsignal in Form eines Tons, einer Tonfolge oder einer oder mehrerer aufleuchtenden Lampen vorgesehen sein. Gegebenenfalls kann ein solches Warnsignal auch direkt an einer betreffenden Arbeitsstation ausgelöst werden, sodass ein Nutzer auf die Arbeitsstation, die anzupassen ist, aufmerksam gemacht wird.

Grundsätzlich können sich aus dem Warnhinweis jedoch auch bereits konkrete Handlungsanweisungen, beispielsweise für eine Einstellung einer der Arbeitsstationen, ergeben.

Es kann vorgesehen sein, dass die Auswerte- und Steuereinrichtung mit einer Anzeigeeinrichtung verbunden ist, wobei die Anzeigeeinrichtung dazu ausgebildet ist, in Abhängigkeit des Steuersignals eine Anweisung zu einer Anpassung zumindest einer Stellgröße zumindest einer Arbeitsstation anzuzeigen.

Diese Anweisung kann dabei sowohl die Arbeitsstation, an welcher der Parameter bestimmt wird, als auch eine dieser vor- oder nachgelagerte Arbeitsstation betreffen. Die angezeigte Anweisung kann ein direkter Hinweis auf eine konkret vorzunehmende Anpassung einer Stellgröße einer der Arbeitsstationen in Form eines Stellwerts sein. Grundsätzlich können jedoch auch lediglich Warnmeldungen bzw. Hinweise darauf angezeigt werden, dass eine der Arbeitsstationen möglicherweise fehlerhaft oder nicht optimal arbeitet und diese von einem Nutzer überprüft werden sollte.

Es kann auch vorgesehen sein, dass aufgrund des erzeugten Steuersignals, welches in Abhängigkeit des Parameters erzeugt wird, Einstellungen für sämtliche Arbeitsstationen vorgeschlagen werden. Derartige Gesamteinstellungen der Verarbeitungslinie können beispielsweise als vorgegebene Programme in der Auswerte- und Steuereinrichtung gespeichert sein, welche ein Nutzer vor Betriebsbeginn bzw. vor Beginn einer Verarbeitung einer Charge wählen kann. Das optimale Programm kann dementsprechend nach einem Erfassen des ersten Produktes einer Charge und der Bestimmung von Parametern vorgeschlagen werden, sodass es auch zu einer solchen Einstellung keinerlei Erfahrung des Nutzers bedarf.

Ferner kann eine solche Anweisung auch ein Aussetzen der Bearbeitung der Produkte an einer der Arbeitsstationen angeben, sodass ein bloßes Durchschleusen der Produkte durch diese Arbeitsstation ohne Bearbeitung erfolgt. Dadurch kann die Verarbeitungslinie flexibel an die zu verarbeitende Produkte angepasst werden, wobei ausschließlich die notwendigen Bearbeitungsschritte bei optimaler Einstellung der jeweiligen Arbeitsstationen durchgeführt werden.

Es kann eine mit zumindest einer der Arbeitsstationen, insbesondere mit allen Arbeitsstationen, verbundene Eingabeeinrichtung vorgesehen sein, mittels derer die Einstellungen der zumindest einen Arbeitsstation und insbesondere die Einstellungen aller Arbeitsstationen veränderbar sind. Insbesondere kann diese Eingabeeinrichtung in eine Anzeigeeinrichtung integriert sein, die dazu ausgebildet ist, in Abhängigkeit des Steuersignals eine Anweisung zur Anpassung von Stellgrößen der Arbeitsstationen anzuzeigen. Durch eine solche Eingabeeinrichtung, die auch mit der Auswerte- und Steuereinrichtung verbunden sein oder dieser entsprechen kann, kann ein Nutzer folglich die Verarbeitungslinie oder zumindest einzelne Arbeitsstationen steuern. Indem diese Eingabeeinrichtung insbesondere in eine Anzeigeeinrichtung, beispielsweise in Form eines Touch-Screens, integriert sein kann, kann der Nutzer auf besonders einfache Art und Weise an der Anzeigeeinrichtung angezeigte Hinweise zur Anpassung von Einstellungen der Arbeitsstationen direkt ausführen und die Verarbeitungslinie kann an einem Ort sowohl überwacht als auch gesteuert werden.

Die Auswerte- und Steuereinrichtung kann mit wenigstens einer anderen Arbeitsstation verbunden sein, wobei die Auswerte- und Steuereinrichtung dazu ausgebildet sein kann, durch die Übermittlung des Steuersignals automatisch zumindest eine Stellgröße der wenigstens einen anderen Arbeitsstation anzupassen. Dies kann einen vollautomatischen Betrieb der Verarbeitungslinie ermöglichen, wobei dieser während der Verarbeitung stets aufgrund des ermittelten Parameters an die jeweilige Betriebssituation angepasst wird. Durch das Steuersignal kann dabei sowohl eine Stellgröße einer vorgelagerten Arbeitsstation als auch eine Stellgröße einer nachgelagerten Arbeitsstation angepasst werden. Bei einer Ansteuerung einer vorgelagerten Arbeitsstation kann erreicht werden, dass die Produkte optimal vorbearbeitet an die Arbeitsstation gelangen, an welcher der jeweilige Parameter bestimmt wird, und es können rückwirkende Korrekturen vorgenommen werden. Durch eine Übermittlung des Steuersignals an eine nachgelagerte Arbeitsstation kann diese bereits speziell auf das folgende Produkt eingestellt und sogar eine produktindividuelle Verarbeitung ermöglicht werden.

Es kann vorgesehen sein, dass die Auswerte- und Steuereinrichtung einen Prozessor umfasst, der dazu ausgebildet ist, einen selbstlernenden Algorithmus auszuführen. Durch einen solchen selbstlernenden Algorithmus können die Steuerung und der Betrieb der Verarbeitungslinie beständig optimiert werden, indem die von der Auswerte- und Steuereinrichtung ausgegebenen Steuersignale unter Berücksichtigung von Stellgrößenanpassungen, die in der Vergangenheit durchgeführt wurden, angepasst werden. Insbesondere können dabei Statistiken oder eventuell registrierte Trends in Bezug auf die Resultate vorhergehender Stellgrößenanpassungen bei einer folgenden Anpassung berücksichtigt werden. Grundsätzlich kann es dabei auch vorgesehen sein, dass voreingestellte Grenzwerte für bestimmte Stellwerte einer Arbeitsstation angepasst werden können, wenn ein Überschreiten dieses Grenzwerts beispielsweise aufgrund eines registrierten Trends notwendig erscheint.

Es kann vorgesehen sein, dass sowohl der automatische Betrieb als auch die Erzeugung von Signalen mittels eines selbstlernenden Algorithmus durch einen Nutzer freigegeben werden. In einer Grundeinstellung erfolgt demnach kein automatischer Betrieb der Verarbeitungslinie und ein Nutzer kann die Steuerung und Einstellung der Arbeitsstationen beliebig vornehmen. Insbesondere kann auch die Freigabe, voreingestellte Grenzwerte gegebenenfalls anzupassen, explizit von einem Nutzer zu erteilen sein.

Die Verarbeitungslinie kann zumindest eine Untersuchungseinrichtung zur Bestimmung wenigstens eines Produktmerkmals umfassen, wobei die Untersuchungseinrichtung mit der Auswerte- und Steuereinrichtung verbunden ist, wobei die Auswerte- und Steuereinrichtung dazu ausgebildet sein kann, in Abhängigkeit des wenigstens einen Produktmerkmals ein weiteres Steuersignal zu erzeugen. Dieses Steuersignal kann gleich behandelt werden wie ein aufgrund einer Parameterbestimmung an einer Arbeitsstation ausgelöstes Steuersignal. Entsprechend kann es auch, je nach Verarbeitung des Steuersignals und Verbindung der Auswerte- und Steuereinrichtung, zur Ansteuerung einer Warneinrichtung, einer Anzeigeeinrichtung oder einer automatischen Steuerung von Arbeitsstationen genutzt werden.

Ein bestimmtes Produktmerkmal kann beispielsweise das Gewicht, die Größe, die Qualität, die Lage bzw. Orientierung oder die Temperatur eines Produktes sein. Ferner können der Temperaturverlauf entlang eines Produktes, dessen Fett- bzw. Fleischanteil oder die Oberflächenbeschaffenheit und Struktur eines Produktes bestimmt werden. Dazu kann die Untersuchungseinrichtung beispielsweise eine Wärmebildkamera, ein Laserthermometer, eine Kamera und eine Bildverarbeitungseinrichtung zur Analyse der Oberflächenstruktur, eine Waage, einen Scanner oder ein Röntgengerät aufweisen.

Es kann vorgesehen sein, dass die Verarbeitungslinie eine Sortier- und/oder Ausrichtungseinrichtung umfasst, die mit der Auswerte- und Steuereinrichtung verbunden ist, wobei die Sortier- und/oder Ausrichtungseinrichtung dazu ausgebildet ist, in Abhängigkeit des Steuersignals die Orientierung der Produkte zu verändern und/oder die Produkte auf unterschiedliche Spuren zu verteilen.

Die Orientierung der Produkte bezeichnet dabei insbesondere deren Ausrichtung, die beispielsweise durch ein Drehen oder Kippen des Produkts auf eine Seite verändert werden kann. Dies kann insbesondere dazu genutzt werden, Produkte vor dem Bearbeiten an einer der Arbeitsstationen in eine für diese Bearbeitung bzw. diese Arbeitsstation optimale Ausrichtung zu bringen, wobei diese optimale Ausrichtung anhand des Parameters ermittelt und ein entsprechendes Steuersignal erzeugt werden kann.

Ferner können die Produkte beispielsweise in Abhängigkeit des Parameters auf unterschiedliche Spuren der Transportstrecke verteilt werden, um ein annähernd gleiches Gesamtgewicht auf den unterschiedlichen Spuren zu erreichen. Ebenfalls können die Produkte in den einzelnen Spuren nach ihrer Qualität sortiert werden, sodass die verarbeiteten Produkte die Verarbeitungslinie bereits nach ihrer Qualität sortiert verlassen und dadurch eine weitere Handhabung oder eine wunschgemäße Belieferung von Abnehmern der verarbeiteten Produkte erleichtert werden kann.

Alternativ oder zusätzlich kann es vorgesehen sein, dass der Transportstrecke nebengeordnete Spuren vorgesehen sind, in welchen die Produkte beispielsweise an eine vorgelagerte Arbeitsstation zurückgeführt werden können, um eine unzureichende Bearbeitung zu korrigieren und ein gewünschtes Resultat zu erreichen. Ebenso können Spuren vorgesehen sein, in welchen die Produkte in einen Entnahme- und/oder Kontrollbereich geführt oder an zumindest einer der Arbeitsstationen vorbeigeführt werden. Für ein auf eine solche Spur gebrachtes Produkt findet folglich keine Bearbeitung an der betreffenden Arbeitsstation statt, während die Bearbeitung nicht grundsätzlich ausgesetzt wird, sodass nachfolgende Produkte weiterhin dort bearbeitet werden.

Bei einigen Ausführungsformen kann die Verarbeitungslinie zumindest eine von der Transportstrecke abzweigende Funktionsstrecke umfassen, auf der die Produkte an eine vorgelagerte Stelle der Transportstrecke zurückführbar sind und/oder auf der die Produkte in einen Entnahme- und/oder Kontrollbereich führbar sind und/oder auf der die Produkte an eine der Verarbeitungslinie vorgelagerte Funktionseinheit zurückführbar sind. Eine solche Überführung der Produkte auf die Funktionsstrecke kann beispielsweise durch eine Sortierund/oder Ausrichtungseinrichtung erfolgen, wobei auch die Arbeitsstationen Mittel aufweisen können, um Produkte von einer Transportstrecke auf die Funktionsstrecke zu befördern. Beispielsweise kann es vorgesehen sein, dass die Produkte an einer der Arbeitsstationen komprimiert und/oder geformt werden, wobei eine solche Arbeitsstation ein sich in Längsrichtung entlang der Transportstrecke erstreckendes Element zum Komprimieren der Produkte aufweisen kann, mittels dessen die Produkte durch ein weiteres Vorschieben auch von der Transportstrecke auf eine Funktionsstrecke befördert werden können.

Nicht zufriedenstellend bearbeitete Produkte können somit beispielsweise auf der Funktionsstrecke an eine vorgelagerte Arbeitsstation zurückgeführt und dort erneut bearbeitet werden, um eine wunschgemäße Bearbeitung zu ermöglichen. Dabei kann eine solche Rückführung auch mehrfach erfolgen, wenn das gewünschte Resultat trotz der erneuten Bearbeitung nicht erreicht wurde.

In einem Entnahme- und/oder Kontrollbereich können die dahin geführten Produkte von einem Nutzer kontrolliert und gegebenenfalls der Verarbeitungslinie erneut zugeführt oder ausgesondert werden. Grundsätzlich ist es auch möglich, dass in dem Entnahme- und/oder Kontrollbereich keine Kontrolle durch einen Nutzer stattfindet, sondern dieser Bereich als direkter Ausschussbereich fungiert oder die Produkte unmittelbar und automatisch von dem Entnahme- und/oder Kontrollbereich einem weiteren Prozess zugeführt werden. Durch die Zuführung der Produkte zu einem weiteren Prozess können gegebenenfalls auch Produkte, die für die Verarbeitung entlang der Verarbeitungslinie ungeeignet erscheinen, genutzt und entsprechend weiterbearbeitet werden.

Das erwähnte Zurückführen der Produkte an eine vorgelagerte Arbeitsstation bedeutet dabei nicht zwangsläufig, dass die Produkte an dieser Arbeitsstation bereits bearbeitet wurden. Vielmehr ist es auch möglich, dass ein zunächst nicht durchgeführter und in der Folge als notwendig erkannter Arbeitsschritt durch ein Zurückführen der Produkte an die betreffende Arbeitsstation nachgeholt wird. Diese Notwendigkeit kann insbesondere aufgrund des ermittelten Parameters erkannt werden.

Bei einigen Ausführungsformen kann zumindest eine der Verarbeitungslinie vorgelagerte Funktionseinheit vorgesehen sein, die mit der Auswerte- und Steuereinrichtung verbunden ist, und/oder es kann zumindest eine der Verarbeitungslinie nachgelagerte Funktionseinheit vorgesehen sein, die mit der Auswerte- und Steuereinrichtung verbunden ist. Dabei kann die Auswerte- und Steuereinrichtung dazu ausgebildet sein, durch die Übermittlung des Steuersignals an die jeweilige Funktionseinheit automatisch zumindest eine Stellgröße der Funktionseinheit anzupassen und/oder die jeweilige Funktionseinheit kann ein weiteres Mittel zur Bestimmung wenigstens eines weiteren Parameters aufweisen, wobei das weitere Mittel mit der Auswerte- und Steuereinrichtung verbunden ist, und wobei die Auswerte- und Steuereinrichtung dazu ausgebildet ist, in Abhängigkeit des weiteren Parameters ein entsprechendes Steuersignal zu erzeugen.

Auch dieses entsprechende Steuersignal kann in gleicher Weise behandelt werden, wie das aufgrund einer Parameterbestimmung an einer Arbeitsstation bzw. aufgrund einer Produktuntersuchung erzeugte Steuersignal. Demnach kann auch dieses Steuersignal, welches aufgrund eines an einer der Verarbeitungslinie vorgelagerten oder nachgelagerten Funktionseinheit ermittelten Parameters erzeugt wird, grundsätzlich zu einer Nutzerkommunikation dienen, indem beispielsweise ein Warnhinweis mittels einer Warneinrichtung oder eine Anweisung auf einer Anzeigeeinrichtung erzeugt wird. Ferner kann dieses Steuersignal prinzipiell auch zur automatischen Steuerung der Arbeitsstationen oder zur Sortierung der Produkte genutzt werden.

Eine solche Verbindung der Auswerte- und Steuereinrichtung mit einer der Verarbeitungslinie vor- und/oder nachgelagerten Funktionseinheit kann folglich eine Kommunikation und Vernetzung des Betriebs über die Verarbeitungslinie hinaus ermöglichen. Dies erlaubt es, eine möglichst große Anzahl von Informationen bei der Steuerung des Betriebs in Betracht zu ziehen und diesen somit zu optimieren.

Bei einigen Ausführungsformen kann eine der Arbeitsstationen der Verarbeitungslinie eine Kühleinrichtung zur Kühlung der Produkte sein. In einer solchen Einrichtung erfolgt allgemein eine Temperierung der Produkte, wobei eine Vor-, Nach- oder Zwischenkühlung durchgeführt werden kann. Eine solche Kühlung kann beispielsweise eine unzureichende Kühlung der Produkte in einem Produktlager ausgleichen, die entstehen kann, wenn ein Produkt am Rand des Produktlagers gelagert wird oder die Kühlung aufgrund eines Wiederauffüllens des Produktlagers gestört wird. Durch eine solche Kühleinrichtung kann folglich sichergestellt werden, dass die Produkte mit der korrekten bzw. gewünschten Temperatur an die weiteren Arbeitsstationen gelangen.

Bei einigen Ausführungsformen kann eine der Arbeitsstationen der Verarbeitungslinie eine Press- und/oder Formeinrichtung sein, die zumindest ein verfahrbares Kontaktelement, insbesondere zumindest einen Stempel, umfasst, mittels dessen die Produkte komprimierbar und/oder formbar sind. Dazu kann das Kontaktelement insbesondere mit einem Gegenelement zusammenwirken, um die Produkte durch ein Drücken gegen dieses Gegenelement, welches beispielsweise als Wand oder als zu dem Kontaktelement entgegengesetzt verfahrbares Element ausgebildet sein kann, zu komprimieren und zu formen.

Durch ein solches Komprimieren kann die Größe und Form des Produktes verändert und dieses an die folgenden Bearbeitungsschritte oder eine gewünschte Größe der verarbeiteten Produkte angepasst werden. Werden die Produkte in einem folgenden Schritt beispielsweise mittels einer Schneidvorrichtung in Scheiben geschnitten, kann durch die Press- und/oder Formeinrichtung bereits die Oberflächengröße dieser Scheiben vorgegeben werden. Ferner kann es auch vorgesehen sein, die Form der Produkte mittels der Press- und/oder Formeinrichtung gezielt zu verändern und wunschgemäß anzupassen.

Insbesondere kann die Press- und/oder Formeinrichtung auch dazu ausgebildet sein, wunschgemäße, vorgegebene oder vorgebbare Formen der Produkte zu erzeugen.

Das verfahrbare Kontaktelement kann sich dabei in Längsrichtung entlang der Transportstrecke oder quer zu dieser erstrecken. Um die Produkte zu komprimieren oder in eine vorgesehene Form zu bringen, kann das Kontaktelement diese gegen ein gegenüberliegendes Gegenelement drücken, welches beispielsweise als Wand vorgesehen sein kann. Dieses Gegenelement kann jedoch auch ebenfalls verfahrbar ausgebildet und entsprechend als ein entgegengesetzt verfahrbares Kontaktelement vorgesehen sein.

Insbesondere kann die Press- und/oder Formeinrichtung zumindest ein sich längs und zumindest ein sich quer in Bezug auf die Transportstrecke erstreckendes Kontaktelement aufweisen, sodass ein Produkt in beiden Richtungen komprimiert werden bzw. aus beiden Richtungen auf die Form des Produktes eingewirkt werden kann.

Die Press- und/oder Formeinrichtung kann einen Servomotor umfassen, mit dem das zumindest eine Kontaktelement antreibbar ist. Dies erlaubt eine präzise Einstellung des Kontaktelements, sodass das Pressen bzw. Formen besonders genau und produktspezifisch unter Berücksichtigung der jeweiligen Produkteigenschaften erfolgen kann.

Die Press- und/oder Formeinrichtung kann zumindest ein Gegenelement aufweisen, mit dem das zumindest eine Kontaktelement zusammenwirkt, um das Produkt zu komprimieren und/oder zu formen, wobei das Gegenelement und/oder das Kontaktelement zumindest teilweise formveränderlich ausgebildet sein können.

Das Gegenelement kann dabei beispielsweise als eine Wand ausgebildet sein, gegen die das Produkt mittels des Kontaktelements gedrückt wird, während es auch möglich ist, das Gegenelement ebenfalls verfahrbar vorzusehen, sodass auch dieses als Kontaktelement fungieren kann.

Indem das Gegenelement und/oder das Kontaktelement zumindest teilweise formveränderlich ausgebildet sein können, kann sich das jeweilige Element einer Kontur des Produkts anpassen. Insbesondere bei einem Frischfleischprodukt, welches einen Knochen aufweist, kann durch die formveränderliche Ausbildung der Lage und Form des Knochens Rechnung getragen werden, um ein Brechen oder Splittern dieses Knochens während der Komprimierung des Produktes zu verhindern. Dazu kann sich das betreffende Element während des Komprimierens an die Kontur des Knochens anpassen und an diesem anliegen bzw. dessen Form nachbilden.

Ferner kann das Ausbilden der Press- und/oder Formstation mit einem derartigen formveränderlichen Element ermöglichen, während des Komprimierens gezielt auf die Form der Produkte einzuwirken und an diesen wunschgemäße Konturen auszubilden. Insbesondere können so nicht ausschließlich geradlinige Konturen, sondern grundsätzlich beliebige Konturen bzw. Formen der Produkte erzeugt werden, indem die Produkte durch ein Verfahren des Kontaktelements gegenüber dem Gegenelement komprimiert werden und das jeweilige formveränderlich ausgebildete Element zur Formgebung genutzt wird.

Um eine Anpassung an die Kontur eines Produktes durch eine Formveränderung zu ermöglichen, kann das jeweilige Element beispielsweise aus einem elastischen Material gefertigt sein oder ein mit Gel oder einem Gas, insbesondere Luft, gefülltes Kissen aufweisen, welches durch einen während des Komprimierens auftretenden Druck verformt werden kann. Ferner kann es vorgesehen sein, dass lediglich Teilflächen des betreffenden Elements elastisch ausgebildet sind, wobei diese Teilflächen auch über mehrere nebeneinander angeordnete Elemente, beispielsweise mehrere Stempel, verteilt sein können.

Eine derartige Press- und/oder Formeinrichtung mit einem formveränderlich ausgebildeten Kontaktelement und/oder Gegenelement kann somit eine besonders produktspezifische Bearbeitung ermöglichen, wobei speziellen Konturen oder Eigenschaften der jeweiligen Produkte Rechnung getragen werden kann.

Insofern bezieht sich die vorliegende Offenbarung auch unabhängig von dem erläuterten System zur Verarbeitung von Produkten mit einer Verarbeitungslinie auf eine Press- und/oder Formeinrichtung zum Komprimieren und/oder Formen von Produkten, die zumindest ein verfahrbares Kontaktelement und zumindest ein mit diesem zusammenwirkendes Gegenelement aufweist, um ein Produkt zu komprimieren und/oder zu formen, wobei das Gegenelement und/oder das Kontaktelement zumindest teilweise formveränderlich ausgebildet sind.

Es kann vorgesehen sein, dass das Gegenelement und/oder das Kontaktelement in Ansprechen auf ein Steuersignal der Auswerte- und Steuereinrichtung formveränderlich sind. Die Veränderung der Form des betreffenden Elements kann somit aktiv gesteuert werden, beispielsweise, wenn aufgrund eines an einer Arbeitsstation bestimmten Parameters oder aufgrund eines Produktmerkmals die Lage und Kontur eines Knochens erkannt wird. Entsprechend kann die Form des jeweiligen Elementes bereits an diese Kontur angepasst werden, sodass das Element die Struktur des Knochens wiedergibt und ein eventuelles Brechen oder Splittern des Knochens während des Komprimierens verhindert werden kann.

Alternativ oder zusätzlich kann durch ein solches direkt ansteuerbares formveränderliches Element aktiv auf die gewünschte Form bzw. Kontur des Produktes nach dem Komprimieren eingewirkt werden, sodass beispielsweise in einem nachfolgenden Schritt wunschgemäß geformte Scheiben von dem Produkt geschnitten werden können. Auch eine solche Anpassung kann in Abhängigkeit von einem an einer der Arbeitsstationen oder einer sonstigen Funktionseinheit bestimmten Parameter erfolgen. Beispielsweise kann es vorgesehen sein, dass an einer der Verarbeitungslinie nachgelagerten Verpackungsmaschine die Form der für die fertig verarbeiteten Produkte vorgesehenen Verpackungsplätze, beispielsweise in einer Folienbahn eingezogene Mulden oder Trays, bestimmt wird und die Form bzw. Kontur der Produkte in der Press- und/oder Formstation durch ein Ansteuern des formveränderlichen Elements an die jeweiligen Verpackungsplätze angepasst wird.

Es kann auch vorgesehen sein, dass das Gegenelement und/oder das Kontaktelement aufgrund von Druck formveränderlich sind. Entsprechend kann auch eine passive Formveränderung erfolgen, sodass sich das jeweilige Element während des Pressens automatisch einer bestimmten Form bzw. Kontur des Produktes anpasst.

Bei einigen Ausführungsformen kann in die Press- und/oder Formeinrichtung eine Schneidvorrichtung zum Aufschneiden der Produkte in Scheiben, insbesondere ein automatischer Slicer, integriert sein. Dies ermöglicht eine besonders kompakte Bauweise, wobei die Produkte direkt in die Schneidvorrichtung vorgeschoben werden können. Die Dicke der Scheiben kann dabei in Abhängigkeit des jeweiligen verarbeiteten Produktes variieren, sodass auch dickere Stücke, die beispielsweise bei einer Verarbeitung von Frischfleisch erzeugt werden können, als Scheiben zu verstehen sind. Insbesondere kann das Aufschneiden der Produkte einen abschließenden Schritt der Verarbeitung entlang der Verarbeitungslinie darstellen, wobei aus den Scheiben Portionen gebildet werden, die wenigstens eine Scheibe umfassen und in der Folge gegebenenfalls an einer nachgelagerten Funktionseinheit weiter gehandhabt werden können.

Diese Press- und/oder Formeinrichtung erlaubt folglich eine besonders kompakte Bauweise, indem zwei an sich gesondert vorzusehende Arbeitsstationen direkt miteinander verbunden und ineinander integriert werden. Insofern bezieht sich die vorliegende Offenbarung auch unabhängig von dem erläuterten System zur Verarbeitung von Produkten mit einer Verarbeitungslinie auf eine Press- und/oder Formeinrichtung zum Komprimieren und/oder Formen von Produkten, in die eine Schneidvorrichtung zum Aufschneiden der Produkte in Scheiben, insbesondere ein automatischer Slicer, integriert ist.

Es kann vorgesehen sein, dass die Press- und/oder Formeinrichtung ein Vorschubmittel aufweist, welches dazu ausgebildet ist, die Produkte in eine Schneidebene der Schneidvorrichtung vorzuschieben, in welcher die Produkte mittels eines Messers, insbesondere eines rotierenden Kreismessers oder Sichelmessers, in Scheiben geschnitten werden.

Insbesondere kann dazu ein Kontaktelement bzw. ein Stempel der Press- und/oder Formeinrichtung vorgesehen sein. Dieses Kontaktelement kann insofern in vorteilhafter Weise eine Doppelfunktion erfüllen, indem es sowohl dem Komprimieren eines Produkts als auch dessen Vorschub in die Schneidebene dient. Entsprechend kann die Schneidvorrichtung der Presse unmittelbar nachgelagert sein, sodass eine besonders kompakte Bauweise erreicht werden kann.

Es kann vorgesehen sein, dass in das Vorschubmittel ein Greifer zum Halten des Produkts integriert ist. Dieser Greifer kann beispielsweise mit Widerhaken oder Krallen ausgebildet sein, sodass er bereits während des Pressens automatisch in das Produkt eingeführt werden kann. Ferner ist es möglich, dass der Greifer verfahrbar bzw. bewegbar ausgebildet ist, sodass das Produkt zunächst komprimiert und/oder geformt und der Greifer erst in der Folge in eine aktive Position gebracht werden kann, in welcher das Produkt durch diesen gegriffen und während des Vorschubs gehalten wird.

Die Press- und/oder Formeinrichtung kann ein Mittel zum Zuschneiden der Produkte vor dem Komprimieren und/oder Formen aufweisen. Durch dieses Mittel kann insbesondere bereits vor dem Komprimieren bzw. Formen die Größe der Produkte angepasst werden, falls diese durch die während des Komprimierens maximal erreichbaren Kräfte nicht in eine ausreichend verkleinerte Form gebracht werden können. Dazu können weitere Mittel vorgesehen sein, die die Produkte während des Zuschneidens, das beispielsweise durch ein Trimmen erfolgen kann, in einer fixierten Position halten.

Insbesondere können die Produkte zunächst an einem in Bezug auf die Transportstrecke vorderseitigen und/oder rückseitigen Ende gehalten und seitlich getrimmt bzw. zugeschnitten werden, woraufhin die Produkte in einem folgenden Schritt entlang der Transportstrecke gehalten und an der Vorder- bzw. Rückseite getrimmt bzw. zugeschnitten werden. Somit kann die Größe der Produktes an allen Seiten angepasst werden, wobei die Reihenfolge der Zuschnitte grundsätzlich beliebig ist. Ebenfalls kann es vorgesehen sein, durch ein Zuschneiden bzw. Trimmen der Produkte vor dem Komprimieren oder Formen eventuell mit Qualitätsmängeln behaftete Produktränder zu entfernen, die aufgrund eines oder mehrerer Parameter bzw. Produktmerkmale erkannt wurden.

Es kann vorgesehen sein, dass die Press- und/oder Formeinrichtung ein Ausschubmittel aufweist, mittels dessen die Produkte von der Transportstrecke geschoben werden können. Dieses Ausschieben kann beispielsweise mittels eines sich entlang der Transportrichtung erstreckenden Kontaktelements bzw. Längsstempels erfolgen, der auch der Komprimierung der Produkte dienen kann. Auch dieser kann entsprechend neben dem Komprimieren in vorteilhafter Weise eine weitere Funktion erfüllen. Dadurch kann erreicht werden, dass trotz der kompakten Bauweise mit einer in die Press- und/oder Formeinrichtung integrierten Schneidvorrichtung ein eventuell notwendiger Produktausschuss ohne weitere Schritte oder Einrichtungen erfolgen kann.

Aus den vorstehenden Erläuterungen geht die grundsätzliche Idee hervor, zumindest ein verfahrbares Kontaktelement einer Press- und/oder Formeinrichtung neben dem Komprimieren und Formen von Produkten in einer weiteren Funktion zu nutzen, beispielsweise zu einem Vorschub der Produkte in eine Schneidvorrichtung oder zu einem seitlichen Ausschub der Produkte von der Transportstrecke. Durch diese allgemeine Idee können die Möglichkeiten der Nutzung einer Press- und/oder Formeinrichtung unter Minimierung des benötigten Bauraums erheblich erweitert werden und es kann ein besonders flexibler Einsatz einer solchen Einrichtung erreicht werden.

Insofern bezieht sich die vorliegende Offenbarung auch unabhängig von dem erläuterten System zur Verarbeitung von Produkten mit einer Verarbeitungslinie auf eine Press- und/oder Formeinrichtung zum Komprimieren und/oder Formen von Produkten, die zumindest ein verfahrbares Kontaktelement, insbesondere zumindest einen Stempel, umfasst, wobei das Kontaktelement in eine Komprimierungsposition verfahrbar ist, um die Produkte zu komprimieren, und wobei das zumindest eine Kontaktelement über die Komprimierungsposition hinaus verfahrbar ist.

Eine der Arbeitsstationen der Verarbeitungslinie kann eine Schneidvorrichtung, insbesondere ein automatischer Slicer, zum Schneiden der Produkte in Scheiben und/oder zum Zerteilen der Produkte sein. Eine solche Schneidvorrichtung kann einen Vorschub für die Produkte umfassen, mittels dessen die aufzuschneidenden und/oder zu zerteilenden Produkte in eine Schneidebene vorgeschoben werden. Ferner kann durch den Vorschub bzw. dessen Geschwindigkeit auf die Dicke der geschnittenen Scheiben eingewirkt werden, sodass beispielsweise auch dickere Stücke, insbesondere bei der Verarbeitung von Frischfleisch, durch eine solche Vorrichtung geschnitten bzw. erzeugt werden können und entsprechend als Scheiben zu verstehen sind. Insbesondere kann bei einer mehrspurig betriebenen Schneidvorrichtung der Vorschub jeder Spur individuell steuerbar sein, sodass in verschiedenen Spuren wunschgemäß unterschiedlich dicke Scheiben geschnitten werden können.

Zum Aufschneiden der Produkte kann die Schneidvorrichtung ein Messer umfassen, welches beispielsweise als Kreis- oder Sichelmesser ausgebildet sein und während des Betriebs rotieren kann. Ferner kann es vorgesehen sein, dass das Messer insbesondere zum Aufschneiden von mehrspurig zugeführten Produkten planetarisch umlaufend in der Schneidvorrichtung geführt ist. Alternativ kann das Messer eine translatorische Bewegung ausführen und die Scheiben beispielsweise durch eine abwärts verlaufende Bewegung in einer vertikalen Ebene erzeugen.

Die Schneidvorrichtung kann ein Portionierband umfassen, auf welchem Portionen aus den geschnittenen Scheiben gebildet werden, die jeweils zumindest eine Scheibe umfassen. Insbesondere kann das Bilden der Portionen auf dem Portionierband einen abschließenden Schritt der Verarbeitung der Produkte entlang der Verarbeitungslinie darstellen, wobei die gebildeten Portionen von dem Portionierband an eine der Verarbeitungslinie nachgelagerten Funktionseinheit übergeben werden können. Beispielsweise kann als erste nachgelagerte Funktionseinheit kann ein sogenannter Einleger vorgesehen sein, der die Portionen weiter transportieren und gegebenenfalls an eine Verpackungsmaschine übergibt. Dabei können insbesondere auch weitere Transportabschnitte zwischen dem Portionierband und der Verpackungsmaschine vorgesehen sein, die beispielsweise einem Puffern von Portionen oder der Bildung von Formaten dienen können.

Der Verarbeitungslinie kann eine Verpackungsmaschine zum Verpacken der verarbeiteten Produkte nachgelagert sein. Diese Verpackungsmaschine muss demnach nicht fest mit der Verarbeitungslinie verbunden bzw. als fester Bestandteil dieser vorgesehen sein, sodass die Verarbeitungslinie flexibel eingesetzt werden kann. Insbesondere kann ein Nutzer eine bestimmte gewünschte Verpackungsmaschine, insbesondere eine Tiefziehmaschine zum Bilden von Mulden in einer Verpackungsfolie oder eine Trays vorschiebende Verpackungsmaschine, wunschgemäß und flexibel an die Verarbeitungslinie anschließen. Durch das Anschließen einer Verpackungsmaschine kann ferner ein vollständiges Präparieren der Produkte erfolgen, sodass diese unmittelbar darauffolgend ausgeliefert werden können.

Dabei können die Produkte direkt an die Verpackungsmaschine übergeben und auf vorgesehene Verpackungsplätze, beispielsweise Mulden oder Trays, ein- bzw. aufgelegt werden. Ebenfalls ist es möglich, dass die verarbeiteten Produkte und insbesondere Portionen von geschnittenen Scheiben zunächst über weitere, der Verarbeitungslinie ebenfalls nachgelagerte Transporteinrichtungen, insbesondere sogenannte Einleger, weitertransportiert und von diesen Einrichtungen an die Verpackungsmaschine übergeben werden.

Der Verarbeitungslinie kann ein Produktlager vorgelagert sein. In diesem können die Produkte insbesondere gekühlt werden, wobei in dem Produktlager auch eine Sortierung der Produkte und somit ein Festlegen der Reihenfolge der Verarbeitung erfolgen kann. Insbesondere zu einem Sortieren der Produkte kann es auch vorgesehen sein, dass die Auswerte- und Steuereinrichtung ein dahingehendes Steuersignal an das Produktlager übermittelt, sodass durch diese Auswerte- und Steuereinrichtung ein Verarbeitungsplan vorgegeben und automatisch eine angepasste Sortierung der Produkte und deren Bereitstellung in dem Produktlager erfolgen kann.

Ferner kann die Transporteinrichtung, mittels derer die Produkte entlang der Transportstrecke transportiert werden, dazu ausgebildet sein, die Produkte automatisch aus dem Produktlager an die Verarbeitungslinie zu fördern oder die Produkte automatisch von dem Produktlager zu übernehmen. Dazu kann die Transporteinrichtung beispielsweise auch einen Roboter aufweisen, mittels dessen die Produkte auf die Verarbeitungslinie aufgesetzt oder aufzusetzende Produkte aus dem Produktlager ausgewählt werden können.

Zusammenfassend bezieht sich die Offenbarung somit auf folgende Ausführungsformen eines Verfahrens zur Verarbeitung von aufzuschneidenden und/oder zu zerteilenden Lebensmittelprodukten:
1. Verfahren zur Verarbeitung von aufzuschneidenden und/oder zu zerteilenden Lebensmittelprodukten, insbesondere zur Verarbeitung von Frischfleisch und/oder von Bacon,
   in einer Verarbeitungslinie mit mehreren Arbeitsstationen,
   wobei die Produkte entlang einer Transportstrecke ein- oder mehrspurig von Arbeitsstation zu Arbeitsstation transportiert werden, und
   wobei an zumindest einer Arbeitsstation wenigstens ein Parameter ermittelt wird, der an einer anderen Stelle der Verarbeitungslinie berücksichtigt wird.
2. Verfahren nach Ausführungsform 1,
   wobei der Parameter eine Eigenschaft des Produktes betrifft.
3. Verfahren nach Ausführungsform 1 oder 2,
   wobei der Parameter eine Stellgröße der einen Arbeitsstation betrifft.
4. Verfahren nach einer der vorhergehenden Ausführungsformen,
   wobei in Abhängigkeit des Parameters ein für einen Nutzer wahrnehmbares Signal erzeugt wird.
5. Verfahren nach einer der vorhergehenden Ausführungsformen,
   wobei der an der einen Arbeitsstation ermittelte Parameter bei der Verarbeitung der Produkte an zumindest einer anderen Arbeitsstation berücksichtigt wird.
6. Verfahren nach einer der vorhergehenden Ausführungsformen,
   wobei in Abhängigkeit des Parameters eine Anweisung für eine Anpassung zumindest einer Stellgröße zumindest einer anderen Arbeitsstation generiert wird.
7. Verfahren nach einer der vorhergehenden Ausführungsformen,
   wobei in Abhängigkeit des Parameters eine Anweisung für ein Aussetzen der Bearbeitung an einer anderen Arbeitsstation generiert wird.
8. Verfahren nach einer der vorhergehenden Ausführungsformen,
   wobei in Abhängigkeit des Parameters eine Anweisung für eine Anpassung der Transportstrecke generiert wird.
9. Verfahren nach einer der Ausführungsformen 6 bis 8,
   wobei die generierte Anweisung unter Berücksichtigung vorhergehender, bereits ausgeführter Anweisungen angepasst wird.
10. Verfahren nach einer der Ausführungsformen 6 bis 9,
   wobei die generierte Anweisung automatisch ausgeführt wird.
11. Verfahren nach einer der vorhergehenden Ausführungsformen,
   wobei zumindest einer der Arbeitsstationen in Bezug auf die Transportstrecke eine Sortier- und/oder Ausrichtungseinrichtung vorgelagert ist, mittels derer die Produkte in Abhängigkeit des wenigstens einen Parameters gehandhabt werden.
12. Verfahren nach Ausführungsform 11,
   wobei die Orientierung der Produkte mittels der Sortier- und/oder Ausrichtungseinrichtung verändert wird.
13. Verfahren nach Ausführungsform 11 oder 12,
   wobei die Produkte mittels der Sortier- und/oder Ausrichtungseinrichtung auf mehrere Spuren (S1, S2, S3) verteilt werden.
14. Verfahren nach Ausführungsform 13,
   wobei die Produkte in zumindest einer der Spuren (S1, S2, S3) in einen Entnahme- und/oder Kontrollbereich geführt werden.
15. Verfahren nach Ausführungsform 13 oder 14,
   wobei die Produkte in zumindest einer der Spuren (S1, S2, S3) an zumindest einer der nachfolgenden Arbeitsstationen vorbeigeführt werden.
16. Verfahren nach einer der Ausführungsformen 13 bis 15,
   wobei die Produkte in zumindest einer der Spuren (S1, S2, S3) an eine der Sortier- und/oder Ausrichtungseinrichtung vorgelagerte Arbeitsstation oder eine der Verarbeitungslinie vorgelagerte Funktionseinheit zurückgeführt werden.
17. Verfahren nach einer der vorhergehenden Ausführungsformen,
   wobei zumindest eine der Verarbeitungslinie vorgelagerte Funktionseinheit vorgesehen ist und/oder wobei zumindest eine der Verarbeitungslinie nachgelagerte Funktionseinheit vorgesehen ist, wobei eine Stellgröße der jeweiligen Funktionseinheit in Abhängigkeit des wenigstens einen Parameters angepasst wird und/oder wobei an der jeweiligen Funktionseinheit wenigstens ein weiterer Parameter bestimmt wird, der an zumindest einer Stelle der Verarbeitungslinie berücksichtigt wird.
18. Verfahren nach Ausführungsform 17,
   wobei der wenigstens eine an einer jeweiligen Funktionseinheit ermittelte weitere Parameter in gleicher Weise wie der an der Arbeitsstation ermittelte wenigstens eine Parameter an einer Stelle der Verarbeitungslinie berücksichtigt wird.
19. Verfahren nach einer der vorhergehenden Ausführungsformen,
   wobei ein der Verarbeitungslinie in Bezug auf die Transportstrecke vorgelagertes Produktlager vorgesehen ist, in dem die Produkte gelagert werden, wobei eine Stellgröße des Produktlagers, insbesondere eine Kühltemperatur, unter Berücksichtigung des wenigstens einen Parameters angepasst wird und/oder wobei an dem Produktlager wenigstens ein weiterer Parameter, insbesondere eine Kühltemperatur, bestimmt wird, der an zumindest einer Stelle der Verarbeitungslinie berücksichtigt wird.
20. Verfahren nach einer der vorhergehenden Ausführungsformen,
   wobei eine der Verarbeitungslinie in Bezug auf die Transportstrecke nachgelagerte Verpackungsmaschine, insbesondere eine Tiefziehverpackungsmaschine, vorgesehen ist, mittels derer die verarbeiteten Produkte verpackt werden, wobei zumindest eine Stellgröße der Verpackungsmaschine in Abhängigkeit des wenigstens einen Parameters angepasst wird und/oder wobei an der Verpackungsmaschine wenigstens ein weiterer Parameter bestimmt wird, der an zumindest einer Stelle der Verarbeitungslinie berücksichtigt wird.
21. Verfahren nach einer der vorhergehenden Ausführungsformen,
   wobei eine Kennzeichnungseinrichtung vorgesehen ist, in der die Produkte gekennzeichnet werden, wobei die Verarbeitungslinie eine Identifikationseinrichtung umfasst, in der die gekennzeichneten Produkte erfasst werden.
22. Verfahren nach Ausführungsform 21,
   wobei zumindest eine Stellgröße zumindest einer Arbeitsstation in Abhängigkeit des erfassten Produktes angepasst wird.
23. Verfahren nach einer der vorhergehenden Ausführungsformen,
   wobei zumindest einer Arbeitsstation in Bezug auf die Transportstrecke eine Untersuchungseinrichtung vorgelagert ist, mittels derer zumindest ein Produktmerkmal bestimmt wird.
24. Verfahren nach Ausführungsform 23,
   wobei das Produktmerkmal bei der Bearbeitung der Produkte an zumindest einer der Untersuchungseinrichtung nachgelagerten Arbeitsstation berücksichtigt wird.
25. Verfahren nach Ausführungsform 23 oder 24,
   wobei das Produktmerkmal bei der Bearbeitung der Produkte an zumindest einer der Untersuchungseinrichtung vorgelagerten Arbeitsstation berücksichtigt wird.
26. Verfahren nach einer der Ausführungsformen 23 bis 25,
   wobei das zumindest eine Produktmerkmal in gleicher Weise wie der an der Arbeitsstation ermittelte wenigstens eine Parameter an einer anderen Stelle der Verarbeitungslinie berücksichtigt wird und/oder wobei das Produktmerkmal in gleicher Weise wie ein an einer der Verarbeitungslinie vorgelagerten oder nachgelagerten Funktionseinheit ermittelter weiterer Parameter an einer anderen Stelle der Verarbeitungslinie berücksichtigt wird.
27. Verfahren nach einer der vorhergehenden Ausführungsformen,
   wobei eine der Arbeitsstationen der Verarbeitungslinie eine Kühleinrichtung ist, an der die Produkte bei einer vorgegebenen oder vorgebbaren Kühltemperatur gekühlt werden oder an der die Produkte auf eine vorgegebene oder vorgebbare Temperatur gekühlt werden.
28. Verfahren nach Ausführungsform 27,
   wobei an der Kühleinrichtung die Kühltemperatur und/oder die Verweilzeit als Parameter ermittelt werden.
29. Verfahren nach Ausführungsform 27 oder 28,
   wobei die Kühltemperatur und/oder die Verweilzeit in Abhängigkeit zumindest eines an zumindest einer anderen Arbeitsstation bestimmten Parameters angepasst werden.
30. Verfahren nach einer der vorhergehenden Ausführungsformen,
   wobei eine der Arbeitsstationen der Verarbeitungslinie eine Press- und/oder Formeinrichtung ist, an der die Produkte komprimiert und/oder geformt werden.
31. Verfahren nach Ausführungsform 30,
   wobei an der Press- und/oder Formeinrichtung als Parameter die Temperatur der Produkte und/oder während des Pressens auftretende Kräfte, insbesondere Press- oder Rückstellkräfte, und/oder Rückstellwege ermittelt werden.
32. Verfahren nach Ausführungsform 30 oder 31,
   wobei eine Stellgröße der Press- und/oder Formeinrichtung in Abhängigkeit eines an einer anderen Arbeitsstation ermittelten Parameters angepasst wird.
33. Verfahren nach einer der vorhergehenden Ausführungsformen,
   wobei eine der Arbeitsstationen eine Schneidvorrichtung ist, insbesondere ein automatischer Slicer, an der die Produkte in Scheiben geschnitten und/oder zerteilt werden.
34. Verfahren nach Ausführungsform 33,
   wobei an der Schneidvorrichtung als Parameter die Temperatur der Produkte und/oder der Gefriergrad der Produkte und/oder die Schneidkräfte bestimmt werden.
35. Verfahren nach Ausführungsform 33 oder 34,
   wobei eine Stellgröße der Schneidvorrichtung in Abhängigkeit eines an einer anderen Arbeitsstation ermittelten Parameters angepasst wird.

Zudem bezieht sich die vorliegende Erfindung zusammenfassend auf folgende Ausführungsformen eines Systems zur Verarbeitung von aufzuschneidenden und/oder zu zerteilenden Lebensmittelprodukten:
1. System zur Verarbeitung von aufzuschneidenden und/oder zu zerteilenden Lebensmittelprodukten, insbesondere zur Verarbeitung von Frischfleisch und/oder von Bacon,
   mit einer Verarbeitungslinie, bevorzugt zur Durchführung eines Verfahrens nach einer der vorhergehenden Ausführungsformen, die mehrere Arbeitsstationen und eine ein- oder mehrspurige Transporteinrichtung zum Transport der Produkte entlang einer Transportstrecke von Arbeitsstation zu Arbeitsstation umfasst,
   wobei zumindest eine der Arbeitsstationen ein Mittel zur Bestimmung wenigstens eines Parameters aufweist, wobei das Mittel mit einer Auswerte- und Steuereinrichtung verbunden ist, die dazu ausgebildet ist, in Abhängigkeit des wenigstens einen Parameters ein Steuersignal zu erzeugen.
2. System nach Ausführungsform 1,
   wobei die Auswerte- und Steuereinrichtung mit einer Warneinrichtung verbunden ist, die dazu ausgebildet ist, in Abhängigkeit des Steuersignals einen Warnhinweis zu erzeugen.
3. System nach Ausführungsform 1 oder 2,
   wobei die Auswerte- und Steuereinrichtung mit einer Anzeigeeinrichtung verbunden ist, wobei die Anzeigeeinrichtung dazu ausgebildet ist, in Abhängigkeit des Steuersignals eine Anweisung zu einer Anpassung zumindest einer Stellgröße zumindest einer Arbeitsstation anzuzeigen.
4. System nach einer der vorhergehenden Ausführungsformen,
   wobei die Auswerte- und Steuereinrichtung mit wenigstens einer anderen Arbeitsstation verbunden ist, wobei die Auswerte- und Steuereinrichtung dazu ausgebildet ist, durch die Übermittlung des Steuersignals automatisch zumindest eine Stellgröße der wenigstens einen anderen Arbeitsstation anzupassen.
5. System nach einer der vorhergehenden Ausführungsformen,
   wobei die Auswerte- und Steuereinrichtung einen Prozessor umfasst, der dazu ausgebildet ist, einen selbstlernenden Algorithmus auszuführen.
6. System nach einer der vorhergehenden Ausführungsformen,
   wobei die Verarbeitungslinie zumindest eine Untersuchungseinrichtung zur Bestimmung wenigstens eines Produktmerkmals umfasst, wobei die Untersuchungseinrichtung mit der Auswerte- und Steuereinrichtung verbunden ist, wobei die Auswerte- und Steuereinrichtung dazu ausgebildet ist, in Abhängigkeit des wenigstens einen Produktmerkmals ein weiteres Steuersignal zu erzeugen.
7. System nach einer der vorhergehenden Ausführungsformen,
   wobei die Verarbeitungslinie eine Sortier- und/oder Ausrichtungseinrichtung umfasst, die mit der Auswerte- und Steuereinrichtung verbunden ist, wobei die Sortier- und/oder Ausrichtungseinrichtung dazu ausgebildet ist, in Abhängigkeit des Steuersignals die Orientierung der Produkte zu verändern und/oder die Produkte auf unterschiedliche Spuren (S1, S2, S3) zu verteilen.
8. System nach einer der vorhergehenden Ausführungsformen,
   wobei die Verarbeitungslinie zumindest eine von der Transportstrecke abzweigende Funktionsstrecke umfasst, auf der die Produkte an eine vorgelagerte Stelle der Transportstrecke zurückführbar sind und/oder auf der die Produkte in einen Entnahme- und/oder Kontrollbereich führbar sind und/oder auf der die Produkte an eine der Verarbeitungslinie vorgelagerte Funktionseinheit zurückführbar sind.
9. System nach einer der vorhergehenden Ausführungsformen,
   wobei zumindest eine der Verarbeitungslinie vorgelagerte Funktionseinheit vorgesehen ist, die mit der Auswerte- und Steuereinrichtung verbunden ist, und/oder wobei zumindest eine der Verarbeitungslinie nachgelagerte Funktionseinheit vorgesehen ist, die mit der Auswerte- und Steuereinrichtung verbunden ist,
   wobei die Auswerte- und Steuereinrichtung dazu ausgebildet ist, durch die Übermittlung des Steuersignals an die jeweilige Funktionseinheit automatisch zumindest eine Stellgröße der Funktionseinheit anzupassen
   und/oder wobei die jeweilige Funktionseinheit ein weiteres Mittel zur Bestimmung wenigstens eines weiteren Parameters aufweist, wobei das weitere Mittel mit der Auswerte- und Steuereinrichtung verbunden ist, wobei die Auswerte- und Steuereinrichtung dazu ausgebildet ist, in Abhängigkeit des weiteren Parameters ein entsprechendes Steuersignal zu erzeugen.
10. System nach einer der vorhergehenden Ausführungsformen,
   wobei eine der Arbeitsstationen der Verarbeitungslinie eine Kühleinrichtung zur Kühlung der Produkte ist.
11. System nach einer der vorhergehenden Ausführungsformen,
   wobei eine der Arbeitsstationen der Verarbeitungslinie eine Press- und/oder Formeinrichtung ist, die zumindest ein verfahrbares Kontaktelement, insbesondere zumindest einen Stempel, umfasst, mittels dessen die Produkte komprimierbar und/oder formbar sind.
12. System nach Ausführungsform 11,
   wobei die Press- und/oder Formeinrichtung einen Servomotor umfasst, mit dem das zumindest eine Kontaktelement antreibbar ist.
13. System nach Ausführungsform 11 oder 12,
   wobei die Press- und/oder Formeinrichtung zumindest ein Gegenelement aufweist, mit dem das zumindest eine Kontaktelement zusammenwirkt, um das Produkt zu komprimieren und/oder zu formen, wobei das Gegenelement und/oder das Kontaktelement zumindest teilweise formveränderlich ausgebildet sind.
14. System nach einer der Ausführungsformen 11 bis 13,
   wobei in die Press- und/oder Formeinrichtung eine Schneidvorrichtung zum Aufschneiden der Produkte in Scheiben, insbesondere ein automatischer Slicer, integriert ist.
15. System nach Ausführungsform 14,
   wobei die Press- und/oder Formeinrichtung ein Vorschubmittel aufweist, welches dazu ausgebildet ist, die Produkte in eine Schneidebene der Schneidvorrichtung vorzuschieben, in welcher die Produkte mittels eines Messers, insbesondere eines rotierenden Kreismessers oder Sichelmessers, in Scheiben geschnitten werden.
16. System nach einer der vorhergehenden Ausführungsformen,
   wobei eine der Arbeitsstationen der Verarbeitungslinie eine Schneidvorrichtung, insbesondere ein automatischer Slicer, zum Schneiden der Produkte in Scheiben und/oder zum Zerteilen der Produkte ist.
17. System nach einer der vorhergehenden Ausführungsformen,
   wobei der Verarbeitungslinie eine Verpackungsmaschine zum Verpacken der verarbeiteten Produkte nachgelagert ist.
18. System nach einer der vorhergehenden Ausführungsformen,
   wobei der Verarbeitungslinie ein Produktlager vorgelagert ist.

Im Folgenden wird die Erfindung rein beispielhaft anhand von Ausführungsbeispielen unter Bezugnahme auf die Zeichnungen beschrieben. Diese stellen lediglich mögliche Ausführungsformen der Erfindung dar, wobei weitere Ausführungsformen der Beschreibung sowie den Ansprüchen zu entnehmen sind.

Es zeigen:
- Fig. 1: eine schematische Darstellung eines Systems zur Verarbeitung von Produkten mit einer Verarbeitungslinie mit drei Arbeitsstationen, drei Untersuchungseinrichtungen und zwei Sortier- und/oder Ausrichtungseinrichtungen zur Veranschaulichung der flexiblen Steuerung eines solchen Systems unter Berücksichtigung von ermittelten Parametern,
- Fig. 2: eine weitere schematische Darstellung eines Systems zur Verarbeitung von Produkten mit einer Verarbeitungslinie mit drei Arbeitsstationen, drei Untersuchungseinrichtungen und zwei Sortier- und/oder Ausrichtungseinrichtungen mit entlang der Transportstrecke bewegten Produkten zur Veranschaulichung von möglichen Bearbeitungsschritten und vorzunehmenden Anpassungen, und
- Fig. 3A bis 3C: schematische Darstellungen einer Press- und/oder Formeinrichtung, insbesondere als mögliche Arbeitsstation einer Verarbeitungslinie.

Fig. 1 zeigt eine schematische Darstellung eines erfindungsgemäßen Systems zur Verarbeitung von Produkten 11 mit einer Verarbeitungslinie 13, die drei jeweils als Raute dargestellte Arbeitsstationen 15, 17 und 19 aufweist. Die zu verarbeitenden Produkte 11 werden dabei in zwei Spuren S1 und S2 mittels einer Transporteinrichtung 41 entlang einer Transportstrecke T von einer Arbeitsstation 15 oder 17 zu einer nachgelagerten Arbeitsstation 17 oder 19 transportiert. Ferner weisen die Arbeitsstationen 15, 17 und 19 wenigstens ein jeweiliges Mittel 43 auf, mittels dessen wenigstens ein Parameter bestimmt werden kann. Ein solcher Parameter kann beispielsweise eine Eigenschaft des Produktes 11 oder eine Stellgröße der jeweiligen Arbeitsstation 15, 17 oder 19 betreffen.

Neben den Arbeitsstationen 15, 17 und 19 umfasst die Verarbeitungslinie 13 drei kreisförmig dargestellte Untersuchungseinrichtungen 33, 35 und 37, in welchen die Produkte 11 untersucht werden und zumindest ein Produktmerkmal bestimmt wird. Außerdem sind an der Verarbeitungslinie 13 zwei Sortier- und/oder Ausrichtungseinrichtungen 21 und 23 vorgesehen, die beispielsweise einem Ausrichten der Produkte 11 oder einem Verteilen der Produkte 11 auf verschiedene Spuren S1 und S2 oder auf die Spur S3 der Funktionsstrecke F dienen können. Auf dieser Funktionsstrecke F werden die Produkte 11 entgegen der Richtung der Transportstrecke T geführt, wobei die Produkte 11 über zwei Abzweige 69 und 70 von der Transportstrecke T auf die Funktionsstrecke F und über zwei Zufuhren 71 und 72 von der Funktionsstrecke F auf die Transportstrecke T gelangen können.

Ferner umfasst das System eine der Verarbeitungslinie 13 vorgelagerte Funktionseinheit 27 sowie eine der Verarbeitungslinie 13 nachgelagerte Funktionseinheit 29. Der Transportstrecke T ist unmittelbar eine Kennzeichnungseinrichtung 31 vorgelagert, in welcher die Produkte 11 gekennzeichnet werden.

Sämtliche Arbeitsstationen 15, 17 und 19, die Untersuchungseinrichtungen 33, 35 und 37 und die Sortierund/oder Ausrichtungseinrichtungen 21 und 23 sind mit einer Auswerte- und Steuereinrichtung 45 verbunden, sodass die genannten Komponenten grundsätzlich sowohl Informationen in Form von bestimmten Parametern oder Produktmerkmalen an die Auswerte- und Steuereinrichtung 45 übermitteln als auch Steuersignale von dieser empfangen können. Gleichermaßen sind auch die vor- bzw. nachgelagerten Funktionseinheiten 27 und 29 mit der Auswerte- und Steuereinrichtung 45 verbunden und weisen Mittel 53 und 55 auf, um Parameter zu bestimmen. Die Auswerte- und Steuereinrichtung 45 ist dabei dazu ausgebildet, die von sämtlichen Einrichtungen übermittelten Informationen auszuwerten und in Abhängigkeit dieser ein oder mehrere Steuersignale zu erzeugen.

Die Auswerte- und Steuereinrichtung 45 ist ferner mit einer Warneinrichtung 47 und einer Anzeige- und Eingabeeinrichtung 49 verbunden, wobei die Warneinrichtung 47 dazu ausgebildet ist, in Ansprechen auf ein Steuersignal der Auswerte- und Steuereinrichtung 45 ein für einen Nutzer wahrnehmbares Warnsignal auszulösen. Dies kann erfolgen, wenn aufgrund der von den weiteren Komponenten an die Auswerte- und Steuereinrichtung 45 übermittelten Informationen bzw. Parameter eine fehlerhafte Verarbeitung erkannt wird.

Auf der Anzeige- und Eingabeeinrichtung 49 können zusätzlich oder alternativ konkrete Hinweise oder Anweisungen für eine vorzunehmende Anpassung von Einstellungen einer oder mehrerer der Arbeitsstationen 15, 17 oder 19 angezeigt werden, indem die Auswerte- und Steuereinrichtung 45 ein dahingehendes Steuersignal an die Anzeige- und Eingabeeinrichtung 49 übermittelt. Ferner kann ein Nutzer an der Anzeige- und Eingabeeinrichtung 49 Befehle eingeben, um die Einstellungen der Arbeitsstationen 15, 17 oder 19 anzupassen. Entsprechend kann durch das Anzeigen vorzunehmender Anpassungen an der Anzeige- und Eingabeeinrichtung 49 sowie durch die Möglichkeit, unmittelbar Befehle einzugeben, sowohl die Überwachung als auch die Steuerung des Betriebs der Verarbeitungslinie 13 durch einen Nutzer an einem gemeinsamen Ort erfolgen.

Die Warneinrichtung 47 sowie die Anzeige- und Eingabeeinrichtung 49 ermöglichen folglich eine Kommunikation mit dem Nutzer, sodass die Bedienung des Systems erheblich erleichtert werden kann, indem der Nutzer durch die Hinweise dabei unterstützt wird und Eingabe- bzw. Handlungsaufforderungen erhält. Eine wunschgemäße Verarbeitung der Produkte 11 kann somit auch dann sichergestellt werden, wenn der das System bedienende Nutzer nicht über eine ausreichende Erfahrung in der Bedienung der Verarbeitungslinie 13 und der Einstellung der Arbeitsstationen 15, 17 und 19 verfügt.

Wie bereits erwähnt, erlaubt die Verbindung der Auswerte- und Steuereinrichtung 45 mit den Arbeitsstationen 15, 17 und 19 grundsätzlich auch, dass diese direkt von der Auswerte- und Steuereinrichtung 45 gesteuert und eingestellt werden. Dies kann einen automatischen und optimierten Betrieb ermöglichen, indem die Auswerteund Steuereinrichtung 45 dazu ausgebildet ist, die durch die Komponenten der Verarbeitungslinie 13 sowie die vorgelagerte Funktionseinheit 27 und die nachgelagerte Funktionseinheit 29 übermittelten Informationen bzw. Parameter auszuwerten und die Steuerung unter Berücksichtigung dieser Informationen durchzuführen.

Insbesondere kann ein solcher automatischer Betrieb der Verarbeitungslinie 13, wenn die Auswerte- und Steuereinrichtung 45 dazu ausgebildet ist, auch erst nach expliziter Freigabe eines Nutzers erfolgen, sodass die Steuerung des Betriebs grundsätzlich einem Nutzer obliegen kann und der automatische Betrieb erst bei erteilter Freigabe erfolgt. Dabei kann es auch vorgesehen sein, dass die Auswerte- und Steuereinrichtung 45 vorgegebene Grenzwerte für Stellgrößen der Arbeitsstationen 15, 17 oder 19 ändern und somit implizit auch äußere Gegebenheiten bei der Steuerung berücksichtigen kann, wobei gerade für ein solches Verschieben von Grenzwerten eine Freigabe durch den Nutzer erfolgen kann. Solche Grenzwertanpassungen können dabei beispielsweise aufgrund erfasster Trends oder auf Basis von durch die Auswerte- und Steuereinrichtung 45 erstellten und ausgewerteten Statistiken erfolgen.

Ferner ist in der gezeigten Darstellung in die Auswerte- und Steuereinrichtung 45 ein Prozessor 51 integriert, der zu einem Ausführen eines selbstlernenden Algorithmus ausgebildet ist. Durch diesen können die Steuersignale, welche die Auswerte- und Steuereinrichtung 45 ausgibt, unter Berücksichtigung der Resultate vorhergehend ausgegebener Steuersignale optimiert werden. Diese Optimierung kann dabei bezüglich der Signale zur Steuerung der Warneinrichtung 49 zum Erzeugen von Warnhinweisen, bezüglich der Signale zur Steuerung der Anzeige- und Eingabeeinrichtung 49 und/oder bezüglich der direkt an die Arbeitsstationen 15, 17 und 19 übermittelten Steuersignale erfolgen.

Diese schematische Darstellung eines Systems zur Verarbeitung von Produkten und insbesondere von Frischfleisch dient lediglich der Veranschaulichung einer möglichen Ausführung eines solchen Systems und der sich dabei ergebenden Möglichkeiten der Kommunikation und intelligenten Steuerung durch eine Vernetzung der Komponenten. Die in der vorliegenden Anmeldung vorgestellten erfindungsgemäßen Konzepte können jedoch grundsätzlich auch durch andere Anordnungen der Komponenten des Systems, ein Weglassen von Komponenten oder Hinzufügen weiterer Einrichtungen oder anderweitiger Vernetzungen verwirklicht werden.

Wie Fig. 1 zeigt, kann der Verarbeitungslinie 13 eine Funktionseinheit 27 vorgelagert sein. Diese Funktionseinheit kann beispielsweise ein Produktlager 27 sein, in welchem die Produkte 11 vor der Verarbeitung gekühlt werden. Das Produktlager 27 weist hier zumindest ein Mittel 53 auf, mittels dessen ein Parameter bestimmt werden kann, wobei dieser insbesondere die Kühltemperatur des Produktlagers 27 betreffen kann. Indem die vorgelagerte Funktionseinheit 27 mit der Auswerte- und Steuereinrichtung 45 verbunden ist, kann der bestimmte Parameter prinzipiell bei der Verarbeitung der Produkte 11 an den Arbeitsstationen 15, 17 und 19 der Verarbeitungslinie 13 berücksichtigt werden. Umgekehrt können auch Einstellungen an der vorgelagerten Funktionseinheit 27 in Abhängigkeit eines innerhalb der Verarbeitungslinie 13 bestimmten Parameters vorgenommen werden, indem dieser von der Auswerte- und Steuereinrichtung 45 ausgewertet und von dieser ein Steuersignal an die Funktionseinheit 27 übermittelt wird.

Unmittelbar bevor die Produkte 11 auf die Verarbeitungslinie 13 gelangen, ist eine Kennzeichnungseinrichtung 31 vorgesehen, um die Produkte 11 zu kennzeichnen. Dazu kann den Produkten 11 beispielsweise durch einen Stempel ein Barcode aufgebracht oder ein Chip eingesetzt werden, sodass die jeweiligen Produkte 11 individuell identifiziert werden können. Die Identifikation der Produkte 11 kann dabei beispielsweise mittels einer Identifikationseinrichtung 33 erfolgen, die hier der ersten Untersuchungseinrichtung 33 entspricht. Auch die einzelnen Arbeitsstationen 15, 17 und 19 können jedoch Mittel zur Identifikation der einzelnen Produkte 11 oder eine integrierte Identifikationseinrichtung aufweisen.

Eine solche Identifikation der Produkte 11 ermöglicht es, eine Vielzahl von Informationen über das spezielle Produkt 11 unmittelbar abzurufen und an die Auswerte- und Steuereinrichtung 45 zu übermitteln. Dadurch kann prinzipiell die Bearbeitung der Produkte 11 an den Arbeitsstationen 15, 17 und 19 individuell auf das jeweilige Produkt 11 abgestimmt durchgeführt werden. Beispielsweise können durch die Identifikation eines Produktes 11 Informationen über dessen Gewicht, die Größe oder die Maße des Produktes 11 sowie ein Fettoder Fleischanteil oder auch die Oberflächenbeschaffenheit des Produktes 11 abgerufen und entsprechend bei der Verarbeitung berücksichtigt werden.

Insbesondere kann die erste Arbeitsstation 15 der Verarbeitungslinie 13 eine Kühleinrichtung 15 zum Kühlen der Produkte 11 sein, um die Produkte 11 optimal auf die folgende Bearbeitung an den Arbeitsstationen 17 und 19 vorzubereiten. Die zweite Arbeitsstation 17 kann ferner eine Press- und/oder Formeinrichtung 17 sein, in welcher die Produkte 11 komprimiert werden und deren Form verändert wird. Die Arbeitsstation 19 kann insbesondere als Schneidvorrichtung 19 vorgesehen sein, in welcher die Produkte 11 in Scheiben 39 geschnitten und aus diesen Scheiben 39 Portionen gebildet werden. Diese können an eine nachgelagerte Funktionseinheit 29, die insbesondere eine Verpackungsmaschine 29 sein kann, weitergegeben werden.

Nachfolgend wird die mögliche Kommunikation und Steuerung des Systems zur Verarbeitung von Produkten 11 unter Annahme einer wie vorstehend beispielhaft erläuterter Ausbildung der Arbeitsstationen 15, 17 und 19 sowie der Funktionseinheiten 27 und 29 beschrieben. Das System dieser Komponenten stellt jedoch lediglich eine mögliche Ausführungsform dar, wobei weitere, insbesondere der Beschreibung und den Ansprüchen zu entnehmende, Ausführungsformen möglich sind. Somit können auch andere, zusätzliche oder lediglich Teile der genannten Komponenten in einem System zur Verarbeitung von Produkten 11 eingesetzt werden.

Die Arbeitsstationen 15, 17 und 19 weisen je ein Mittel 43 auf, mittels dessen zumindest ein Parameter bestimmt werden kann, der an die Auswerte- und Steuereinrichtung 45 übermittelt werden kann. Ein solches Mittel 43 kann beispielsweise eine Wärmebildkamera, ein Scanner, eine Waage, ein Laserthermometer, eine Kamera zur Oberflächenanalyse, ein Bilderkennungsprogramm oder ein Röntgengerät sein, welches insbesondere zum Erkennen der Lage eines Knochens verwendet werden kann.

Der bestimmte Parameter kann sich auf das jeweilige Produkt 11, welches an der jeweiligen Arbeitsstation 15, 17 oder 19 bearbeitet wird, beziehen und insofern ein Produktmerkmal wie die Größe oder Temperatur des Produktes 11 betreffen oder von einem solchen abgeleitet sein. Ferner kann der Parameter auch eine Stellgröße bzw. einen Wert wiedergeben, auf den eine Stellgröße der Arbeitsstationen 15, 17 oder 19 eingestellt werden kann. Entsprechend kann das Mittel 43 auch dazu ausgebildet sein, Messungen im Betrieb der jeweiligen Arbeitsstation 15, 17 oder 19 durchzuführen, um beispielsweise mittels einer Kraftverlaufsmessung in der Press- und/oder Formeinrichtung 17 die Presskräfte zu überprüfen, wodurch insbesondere splitternde Knochen erkannt werden können. Ebenfalls können die während des Schneidens in der Schneidvorrichtung 19 auftretenden Schneidkräfte oder sonstige relevante Werte wie der Schneidwinkel bestimmt und an die Auswerteund Steuereinrichtung 45 übermittelt werden.

Aus dem Produktlager 27 auf die Verarbeitungslinie 13 gelangende Produkte 11 werden zunächst mittels der ersten Untersuchungseinrichtung 33 untersucht, wobei bestimmte Produktmerkmale wie die Größe des Produktes 11, das Produktgewicht, die Qualität, die Lage bzw. die Ausrichtung des Produktes 11, dessen Temperatur, Fett- oder Fleischanteil oder die Oberflächenbeschaffenheit des Produktes 11 bestimmt werden können. Ferner kann beispielsweise die Transportdauer der Produkte 11 von dem Produktlager 27 an die Verarbeitungslinie 13 bestimmt werden und an die Auswerte- und Steuereinrichtung 45 übermittelt werden, aufgrund welcher diese beispielsweise eine Anpassung der Kühltemperatur des Produktlagers 27 veranlassen kann. Dazu kann die Auswerte- und Steuereinrichtung 45 beispielsweise die mit dieser verbundene Warneinrichtung 47 ansteuern, um einen Nutzer durch einen erzeugten Warnhinweis auf eine vorzunehmende Anpassung aufmerksam zu machen. Ferner kann es vorgesehen sein, dass die Auswerte- und Steuereinrichtung 45 ein Steuersignal an die Anzeige- und Eingabeeinrichtung 49 sendet, die einen Hinweis auf eine vorzunehmende Änderung der Lagertemperatur und gegebenenfalls die optimale einzustellende Temperatur anzeigt. In beiden Fällen kann die Bedienung der Verarbeitungslinie 13 durch den Nutzer erheblich vereinfacht werden, da dieser weder die Produktuntersuchung selbst vornehmen noch über eine besondere Erfahrung verfügen muss, um die notwendige Anpassung zu erkennen und vorzunehmen.

Es kann auch vorgesehen sein, dass die Auswerte- und Steuereinrichtung 45 die notwendige Anpassung der Kühltemperatur am Produktlager 27 automatisch vornimmt, indem die Auswerte- und Steuereinrichtung 45 automatisch ein Steuersignal an das Produktlager 27 sendet. Grundsätzlich können sämtliche in der Folge beschriebenen Anweisungen für eine Anpassung des Verarbeitungsprozesses automatisch ausgeführt und/oder mittels der Anzeige- und Eingabeeinrichtung 49 und/oder der Warneinrichtung 47 an einen Nutzer übermittelt werden, sodass dieser die Anpassung vornehmen kann. Die sich ergebenden Möglichkeiten hängen dabei insbesondere von den vorgesehenen Komponenten der Verarbeitungslinie 13 und der Ausbildung und Verbindung der Auswerte- und Steuereinrichtung 45 ab.

An der ersten Untersuchungseinrichtung 33 kann beispielsweise die Temperatur der Produkte 11 bestimmt werden und an die Auswerte- und Steuereinrichtung 45 übermittelt werden. Aufgrund der von der Untersuchungseinrichtung 33 bestimmten Temperatur der Produkte 11 kann in der Folge beispielsweise die Temperatur des Produktlagers 27 angepasst werden, insbesondere wenn erfasst wird, dass die Produkte 11 nicht ausreichend gekühlt auf die Verarbeitungslinie 13 gelangen. Ebenfalls kann aufgrund der gemessenen Temperatur die Kühltemperatur der nachgelagerten Kühleinrichtung 15 angepasst werden, sodass eine gegebenenfalls unzureichende Lagertemperatur am Produktlager 27 ausgeglichen werden kann. Auch die Verweildauer der Produkte 11 in der Kühleinrichtung 15 kann aufgrund der ermittelten Temperatur angepasst werden, wodurch der während der Bearbeitung in der Kühleinrichtung 15 zu erreichende Kühleffekt in Abhängigkeit der von der Untersuchungseinrichtung 33 ermittelten Temperatur der Produkte 11 ebenfalls angepasst werden kann.

Gleichermaßen können mittels der Untersuchungseinrichtung 33 das Gewicht, die Dimension oder die Oberfläche bzw. deren Kontur der Produkte 11 bestimmt werden und es kann aufgrund dieser Parameter eine Anpassung der Kühltemperatur oder der Verweilzeit der Produkte 11 an der Kühleinrichtung 15 vorgenommen werden.

Auf die erste Untersuchungseinrichtung 33 folgend gelangen die Produkte 11 entlang der Transportstrecke T an die Kühleinrichtung 15, an welcher durch das Mittel 43 weitere Parameter des Produktes 11 bestimmt und an die Auswerte- und Steuereinrichtung 45 übermittelt werden können. Insbesondere kann dabei die Kühltemperatur übermittelt und beispielsweise an der Press- und/oder Formeinrichtung 17 bei der Einstellung der Presskräfte zum Komprimieren und Formen des Produktes 11 berücksichtigt werden.

Ferner ist eine der Kühleinrichtung 15 nachgelagerte Sortier- und/oder Ausrichtungseinrichtung 21 vorgesehen, mittels derer die Produkte 11 gehandhabt werden. Dabei kann insbesondere die Orientierung der Produkte verändert werden, um diese in der optimalen Ausrichtung für die folgende Bearbeitung an der Press- und/oder Formeinrichtung 17 weiter zu transportieren und dieser zuzuführen. Insbesondere kann die Ausrichtung durch ein Drehen der Produkte 11 oder ein Kippen auf eine Seite angepasst werden, sodass ein Produkt 11 beispielsweise in eine Orientierung gebracht werden kann, dass ein an der Untersuchungseinrichtung 33 erkannter Knochen 67 derart positioniert wird, dass ein Splittern dieses Knochens 67 in der Press- und/oder Formeinrichtung 17 verhindert werden kann (vgl. auch Fig. 2 und 3A bis 3C).

Ferner können die Produkte 11 mittels der Sortier- und/oder Ausrichtungseinrichtung 21 auf verschiedene Spuren S1, S2 oder S3 verteilt werden. Die Spuren S1 und S2 sind dabei Teil der Transportstrecke T, während die Spur S3 der Funktionsstrecke F zugeordnet ist, die in entgegengesetzter Richtung zu der Transportstrecke T verläuft.

Durch eine Verteilung der Produkte 11 auf die Spuren S1 und S2 der Transportstrecke T kann beispielsweise erreicht werden, dass in beiden Spuren S1 und S2 Produkte 11 eines annähernd gleichen Gesamtgewichts transportiert werden. Ferner kann auch eine Sortierung der Produkte 11 in Abhängigkeit von deren Qualität erfolgen, sodass die Produkte 11 qualitätsabhängig der Schneidvorrichtung 19 zugeführt werden, wo die Produkte 11 in Scheiben 39 geschnitten und Portionen aus zumindest einer Scheibe 39 gebildet werden. Die verarbeiteten Produkte 11 bzw. die Portionen verlassen die Verarbeitungslinie 13 somit nach ihrer Qualität sortiert, sodass deren weitere Handhabung und beispielsweise Verpackung in der nachgelagerten Verpackungsmaschine 29 ebenfalls unmittelbar und ohne weitere Prüfung qualitätsabhängig erfolgen kann.

Insbesondere kann die Sortierung der Produkte 11 in der Sortier- und/oder Ausrichtungseinrichtung 21 aufgrund der an der ersten Untersuchungseinrichtung 33 ermittelten Dimension, des Gewichts oder der Oberflächenkontur der Produkte 11 erfolgen.

Neben der Verteilung der Produkte 11 auf die Spuren S1 und S2 der Transportstrecke T können diese auch über den Abzweig 69 auf die Spur S3 der Funktionsstrecke F verteilt werden, wobei die Produkte 11 auf dieser entgegengesetzt zu der Transportstrecke T transportiert werden. Sich auf der Funktionsstrecke F befindende Produkte 11 können über die Zufuhr 71 wiederum auf die Transportstrecke T geführt werden, sodass die Produkte 11 erneut an die Kühleinrichtung 15 gelangen. Durch diese Zufuhr 71 kann erreicht werden, dass Produkte 11, die zunächst nicht ausreichend an der Kühleinrichtung 15 gekühlt wurden, von dieser erneut bearbeitet werden können, sodass letztlich eine zufriedenstellende Kühlung erfolgen kann. Dabei kann diese Rückführung eines Produktes 11 über den Abzweig 69 und die Zufuhr 71 prinzipiell auch mehrfach und insbesondere so oft erfolgen, bis der gewünschte Kühleffekt an der Kühleinrichtung 15 erreicht wurde.

Ferner können die Produkte 11 auf der Funktionsstrecke F in einen Entnahme- und/oder Kontrollbereich 25 geführt werden. In diesen Bereich geführte Produkte 11 können von einem Nutzer kontrolliert und gegebenenfalls wieder an einer bestimmten Stelle der Verarbeitungslinie 13 auf die Transportstrecke T eingesetzt werden. Nicht brauchbare oder mangelhaft bearbeitete Produkte 11 können ferner nach einer Kontrolle durch den Nutzer von diesem in einen Ausschussbereich gebracht werden.

Insbesondere bei einer automatischen Steuerung der Verarbeitungslinie 13 durch die Auswerte- und Steuereinrichtung 45 ist es jedoch auch möglich, dass der Entnahme- und/oder Kontrollbereich 25 ein automatischer Ausschussbereich ist und keine weitere Kontrolle durch einen Nutzer stattfindet. Dabei kann die Auswerte- und Steuereinrichtung 45 bzw. der Prozessor 51 einen Auswerfemodus umfassen oder einen Auswerfealgorithmus ausführen, der auszuschießende Produkte 11 zuverlässig erkennt, den Produktausschuss jedoch dennoch minimiert.

Prinzipiell können in den Entnahme- und/oder Kontrollbereich 25 gelangte Produkte 11 auch unmittelbar von diesem einem weiteren und nicht der Verarbeitungslinie 13 zuzuordnenden Verarbeitungsprozess zugeführt werden, sodass auch für die Verarbeitung entlang der Verarbeitungslinie 13 ungeeignete Produkte 11 genutzt und anderweitig bearbeitet werden können.

Weiter mittels der Transporteinrichtung 41 von der Sortier- und/oder Ausrichtungseinrichtung 21 entlang der Transportstrecke T transportierte Produkte 11 werden zu der zweiten Untersuchungseinrichtung 35 befördert, die somit der Press- und/oder Formeinrichtung 17 unmittelbar vorgelagert ist. In dieser Untersuchungseinrichtung 35 kann beispielsweise die Temperatur eines Produktes 11 oder der Temperaturverlauf entlang dieses Produktes 11 bestimmt und an die Auswerte- und Steuereinrichtung 44 übermittelt werden. Aufgrund dieser Parameter kann beispielsweise die Kühltemperatur der Kühleinrichtung 15 oder die Verweildauer der Produkte 11 an der Kühleinrichtung 15 angepasst werden. Ebenso kann in der Untersuchungseinrichtung 35 der Gefriergrad eines Produktes 11 bzw. die Kristallisation an dessen Oberfläche bestimmt und die Kühleinrichtung 15 in Abhängigkeit dessen angepasst werden.

Insofern erfolgt aufgrund der in der Untersuchungseinrichtung 35 erfassten Produktmerkmale eine rückwirkende Anpassung der Kühleinrichtung 15, wobei letztlich das Resultat der Kühlung überprüft und die Kühleinrichtung 15 unter Berücksichtigung dieses Resultates eingestellt wird, um nachfolgende Produkte 11 optimal verarbeiten zu können. Es können somit sowohl nachgelagerte Arbeitsstationen 15, 17 oder 19 als auch vorgelagerte Arbeitsstationen 15 oder 17 aufgrund eines ermittelten Produktmerkmals angepasst werden, sodass eine möglichst vollständige und flexible Vernetzung der Verarbeitungslinie 13 erreicht werden kann.

Ferner kann an der Untersuchungseinrichtung 35 erneut die Dimension oder die Oberflächenkontur eines Produktes 11 bestimmt und die nachgelagerte Press- und/oder Formeinrichtung 17 aufgrund dessen eingestellt werden, um eine optimale Bearbeitung der Produkte 11 zu ermöglichen. Insbesondere können in Abhängigkeit der erfassten Parameter die während des Komprimierens und/oder Formens der Produkte 11 in der Pressund/oder Formeinrichtung 17 auftretenden Presskräfte oder der Prozessverlauf, beispielsweise bezogen auf die Gradienten der Presskräfte während der Bearbeitung, angepasst werden. Ebenso kann die optimale Position des Produktes 11 in der Press- und/oder Formeinrichtung 17 ermittelt und das Produkt 11 in diese Position gebracht werden, sodass die Bearbeitung speziell auf das jeweilige Produkt 11 angepasst durchgeführt werden kann.

Ferner kann die Press- und/oder Formeinrichtung 17 über verschiedene Kontaktelemente 57, 59, 61 und 63 (vgl. Fig. 3A bis 3C) verfügen, mittels derer ein Produkt 11 durch ein jeweiliges entgegengesetztes Fahren der Kontaktelemente 57 und 61 bzw. 59 und 63 gegeneinander komprimiert bzw. geformt wird. Dabei kann die Press- und/oder Formeinrichtung 17 verschiedene Arten solcher Kontaktelemente 57, 59, 61 und 63 aufweisen, die insbesondere stempelartig ausgebildet sein können, wobei aufgrund der in der Untersuchungseinrichtung 35 bestimmten Parameter eine passende Auswahl dieser Kontaktelemente 57, 59, 61 und 63 für das Komprimieren oder Formen des jeweiligen Produktes 11 bereitgestellt werden kann. Durch diese speziell auf ein bestimmtes Produkt 11 abgestimmte Auswahl der Stempel kann auch innerhalb einer Charge eine variierende Bearbeitung stattfinden, die jeweils individuell und optimal auf ein jeweiliges Produkt 11 abgestimmt wird.

Ferner kann in der Untersuchungseinrichtung 35 ein sich in einem Produkt 11 befindender Knochen erfasst und dessen Länge, Lage oder Durchmesser bestimmt werden, wozu die Untersuchungseinrichtung 35 beispielsweise ein Röntgengerät aufweisen kann. Auch diese Informationen können an die Auswerte- und Steuereinrichtung 45 übermittelt werden, die daraufhin die Press- und/oder Formeinrichtung 17 einstellen oder einen Nutzer durch eine Anzeige an der Anzeige- und Eingabeeinrichtung 49 oder einen Warnhinweis an der Warneinrichtung 47 zu einer solchen Einstellung auffordern kann. Insbesondere können dabei die Presskräfte, deren Richtung oder der Kraftverlauf während eines Komprimierens der Produkte 11 angepasst werden. Ferner kann an der Untersuchungseinrichtung 35 wiederum die Temperatur des Produktes 11 oder der Temperaturverlauf entlang des Produktes 11 bestimmt und an der Press- und/oder Formeinrichtung 17 berücksichtigt werden.

Auch während der Bearbeitung der Produkte 11 an der Press- und/oder Formeinrichtung 17 kann deren Temperatur bestimmt und aufgrund derer mittels der Auswerte- und Steuereinrichtung 45 eine Anpassung der Kühleinrichtung 15 hinsichtlich der Kühltemperatur oder der Verweildauer der Produkte 11 in der Kühleinrichtung 15 vorgenommen werden. Ebenso können die während eines Komprimierens auftretenden Presskräfte oder die auf die Kontaktelemente 57, 59, 61 und 62 wirkenden Rückstellkräfte bestimmt werden und bei der Einstellung der Kühltemperatur oder der Verweildauer an der Kühleinrichtung 15 berücksichtigt werden. Diese rückwirkende Kommunikation von der Press- und/oder Formeinrichtung 17 an die Kühleinrichtung 15 ist insbesondere daher relevant, da sich die Temperatur der Produkte 11 direkt in deren Verformbarkeit und den erforderlichen Presskräften niederschlagen kann und die Einstellung der Kühleinrichtung 15 somit einen direkten Einfluss auf die Bearbeitung der Produkte 11 an der Press- und/oder Formeinrichtung 17 ausüben kann.

Auf die Press- und/oder Formeinrichtung 17 folgend gelangen die komprimierten bzw. geformten Produkte 11 an eine weitere Untersuchungseinrichtung 37. An dieser Untersuchungseinrichtung 37 kann beispielsweise wiederum die Temperatur oder der Temperaturverlauf entlang eines Produkts 11 bestimmt werden und an die Auswerte- und Steuereinrichtung 45 übermittelt werden. Das an der Untersuchungseinrichtung 37 ermittelte Produktmerkmal kann bei der Einstellung der Kühleinrichtung 15 berücksichtigt werden. Ebenso kann dieses Produktmerkmal dazu verwendet werden, eine Einstellung der Press- und/oder Formeinrichtung 17 zu verändern, um insbesondere ein vor oder während der Bearbeitung an der Press- und/oder Formeinrichtung 17 erfolgendes Kühlen der Produkte 11 anzupassen.

Ferner kann mittels der Untersuchungseinrichtung 37 eine eventuelle Gratbildung der Produkte 11 ermittelt und in Abhängigkeit dieser die Press- und/oder Formeinrichtung 17 insbesondere hinsichtlich der erzeugten Presskräfte oder des Prozessablaufs bzw. des Kraftverlaufs angepasst werden. Dadurch kann erreicht werden, dass sich während des Komprimierens bzw. Formens nachfolgender Produkte 11 keine Risse in diesen bilden und gleichmäßige Scheiben 39 durch die Schneidvorrichtung 19 erzeugt werden können.

Auch die Oberflächenkontur des komprimierten Produkts 11 kann durch die Untersuchungseinrichtung 37 bestimmt und an die Schneidvorrichtung 19 übermittelt werden, sodass dort beispielsweise ein eventuell notwendiges Trimmen des betreffenden Produkts 11 erfolgen oder der Schneidwinkel an die Kontur des Produktes 11 angepasst werden kann.

Nach der Produktuntersuchung durch die Untersuchungseinrichtung 37 werden die Produkte 11 an eine weitere Sortier- und/oder Ausrichtungseinrichtung 23 transportiert. Auch an dieser Sortier- und/oder Ausrichtungseinrichtung 23 kann die Orientierung bzw. Ausrichtung der Produkte 11 verändert werden, um diese der Schneidvorrichtung 19 optimal ausgerichtet zuführen zu können. Ebenfalls kann eine Spurverteilung der Produkte 11 erfolgen und nicht zufriedenstellend bearbeitete Produkte 11, insbesondere nicht zufriedenstellend komprimierte bzw. geformte Produkte 11, können über den Abzweig 70 auf die Funktionsstrecke F verteilt werden. Je nach Beschaffenheit der Produkte 11 können diese beispielsweise über die Zufuhr 72 der Pressund/oder Formeinrichtung 17 erneut zugeführt werden, sodass gegebenenfalls ein wunschgemäßes Resultat der Bearbeitung erreicht werden kann. Es ist jedoch auch möglich, von der Sortier- und/oder Ausrichtungseinrichtung 23 auf die Funktionsstrecke F verteilte Produkte 11 erst über die Zufuhr 71 zurück auf die Transportstrecke T zu führen, sodass das betreffende Produkt 11 die gesamte Verarbeitungslinie 13 ab der Kühleinrichtung 15 erneut durchläuft.

Nicht brauchbare Produkte 11 oder Produkte 11, bei denen Fehler in der Verarbeitung wie beispielsweise ein gesplitterter Knochen 67 festgestellt wurden, können ferner über die Funktionsstrecke F in den Entnahmeund/oder Kontrollbereich 25 geführt und dort von einem Nutzer kontrolliert und gegebenenfalls ausgesondert werden (vgl. auch Fig. 2).

Im letzten Bearbeitungsschritt entlang der Verarbeitungslinie 13 werden die Produkte 11 mittels einer Schneidvorrichtung 19 in Scheiben 39 geschnitten und aus diesen Scheiben 39 Portionen gebildet (vgl. auch Fig. 2 und Fig. 3C). Dabei können während des Schneidens beispielsweise die auftretenden Schneidkräfte ermittelt und an die Auswerte- und Steuereinrichtung 45 übermittelt werden, woraufhin eine Anpassung der Kühleinrichtung 15 erfolgen kann. Wiederum kann diese rückwirkende Kommunikation dem direkten Einfluss der Temperatur auf den Schneidvorgang Rechnung tragen.

Die Schneidgeschwindigkeit innerhalb der Schneidvorrichtung 19, wobei das Schneiden beispielsweise mittels eines umlaufenden Kreis- oder Sichelmessers erfolgen kann, kann ferner aufgrund eines ermittelten Fettanteils des betreffenden Produktes 11, der bereits an der Untersuchungseinrichtung 33 ermittelt worden sein kann, angepasst werden.

Es kann eine weitere Untersuchung der geschnittenen Scheiben 39 vorgesehen sein, wobei beispielsweise deren Temperatur oder der Gefriergrad im Sinne einer Kristallisation an der Oberfläche bestimmt werden kann. Diese Parameter können an der Kühleinrichtung 15 berücksichtigt werden, indem die Kühltemperatur oder die Verweildauer der Produkte 11 an der Kühleinrichtung 15 angepasst werden. Ebenfalls kann aufgrund dieser unmittelbar nach dem Schneiden ermittelten Parameter auch ein eventuelles Kühlen vor oder während des Komprimierens der Produkte 11 an der Press- und/oder Formeinrichtung 17 korrigiert werden. Dabei kann diese Untersuchung beispielsweise an der Scheibenfläche unmittelbar vor dem Schneiden, an den abgeschnittenen und herabfallenden Scheiben 39, oder während der Portionsbildung bzw. deren Weitertransport erfolgen.

Die mittels der Schneidvorrichtung 19 gebildeten Portionen werden von der Verarbeitungslinie 13 an die Verpackungsmaschine 29 übergeben, an der die Portionen verpackt werden. Eine solche Verpackungsmaschine 29 kann als Tiefziehverpackungsmaschine ausgebildet sein, wobei Mulden in eine Verpackungsfolie gezogen werden, in die die Portionen eingelegt werden. Ferner können durch die Verpackungsmaschine 29 Trays vorgezogen werden, auf welchen die Portionen abgelegt werden.

Auch die Verpackungsmaschine 29 weist ein Mittel 55 auf, um Parameter bezogen auf die Portionen bzw. die Scheiben 39 oder bezogen auf Stellgrößen der Verpackungsmaschine 29 zu bestimmen und an die Auswerteund Steuereinrichtung 45 zu übermitteln. Diese Parameter können ebenfalls während der Verarbeitung der Produkte 11 entlang der Verarbeitungslinie 13 berücksichtigt werden. Beispielsweise kann die Verpackungsmaschine 29 die Dimensionen der bereitgestellten Verpackungsplätze an die Auswerte- und Steuereinrichtung 45 übermitteln, die daraufhin die Presskräfte zum Komprimieren und Formen der Produkte 11 an der Pressund/oder Formeinrichtung 17 derart einstellen kann, dass die aus den gepressten Produkten 11 geschnittenen Scheiben 39 und gebildeten Portionen an den bereitgestellten Verpackungsplätzen verpackt werden können. Umgekehrt ist es auch möglich, dass die Verpackungsmaschine 29 beispielsweise aufgrund der ermittelten Dimension der Produkte 11 eingestellt und Prozesse derart gesteuert werden, dass die entstehenden Mulden einer Tiefziehverpackungsmaschine die erforderliche Größe zur Aufnahme der geschnittenen Produkte 11 aufweisen.

Das hier gezeigte System zur Verarbeitung von aufzuschneidenden und/oder zu zerteilenden Lebensmittelprodukten 11 und insbesondere zur Verarbeitung von Frischfleisch und/oder von Bacon ermöglicht eine umfassende Vernetzung aller an der Verarbeitung beteiligten Arbeitsstationen 15, 17 und 19, der Untersuchungseinrichtungen 33, 35 und 37, der Sortier- und/oder Ausrichtungseinrichtungen 21 und 23 und sogar eine Kommunikation über die Verarbeitungslinie 13 hinaus mit den vorgelagerten und nachgelagerten Funktionseinheiten 27 und 29. Dabei kann eine Vielzahl von Informationen sowohl über die Produkte 11 als auch hinsichtlich relevanter Einstellungen von Betriebswerten im Bereich der gesamten Verarbeitungslinie bzw. von vor- und nachgelagerten Funktionseinheiten 27 und 29 ermittelt und der Betrieb speziell auf die einzelnen Produkte 11 oder bestimmte Betriebssituationen angepasst durchgeführt werden.

Insbesondere bei einer automatischen Steuerung der Verarbeitungslinie 13 durch die Auswerte- und Steuereinrichtung 45 bedarf es dabei keinerlei besonderer Erfahrung oder Expertise eines Nutzers, sodass dieser den Betrieb lediglich grundsätzlich überwachen muss. Auch die Erzeugung von für den Nutzer wahrnehmbaren Signalen durch beispielsweise einen Hinweis oder eine Anweisung an der Anzeige- und Eingabeeinrichtung 49 oder ein erzeugtes Warnsignal an der Warneinrichtung 47 kann die Bedienung der Verarbeitungslinie 13 erheblich erleichtern. Ferner kann durch die Berücksichtigung der an verschiedenen Stellen der Verarbeitungslinie 13 ermittelten Parameter an anderen Stellen der Verarbeitungslinie 13 die Verarbeitung optimiert und speziell auf die jeweiligen Produkte 11 angepasst durchgeführt werden, sodass optimale Resultate erreicht werden können.

Um den Betrieb der Verarbeitungslinie 13 darüber hinaus beständig optimieren zu können, kann die Auswerteund Steuereinrichtung 45 insbesondere den erwähnten Prozessor 51 aufweisen, sodass die Steuerung mittels eines selbstlernenden Algorithmus erfolgen kann. Dies kann beispielsweise dazu dienen, eine grundsätzlich vorzunehmende Anpassung einer Stellgröße einer der Arbeitsstationen 15, 17 oder 19 unter Berücksichtigung bereits erfolgter Anpassungen zu optimieren. Entsprechend werden die Resultate vorhergehender Anpassungen bei der Vornahme weiterer Anpassungen berücksichtigt, sodass die automatische Steuerung der Verarbeitungslinie 13 während des Betriebs zunehmend und selbstständig verbessert werden kann.

Fig. 2 zeigt eine weitere schematische Darstellung eines Systems zur Verarbeitung von Produkten und insbesondere zur Verarbeitung von Frischfleisch entlang einer Verarbeitungslinie 13. Diese Verarbeitungslinie 13 weist die gleichen Komponenten wie die schematisch in Fig. 1 gezeigte Verarbeitungslinie 13 auf, wobei die Produkte 11 zur Veranschaulichung der erfolgenden Prozesse größer dargestellt sind und die Transportstrecke T lediglich eine Spur S1 umfasst.

Ein aus dem vorgelagerten Produktlager 27 auf die Verarbeitungslinie 13 befördertes Produkt 11 wird dabei zunächst von der Untersuchungseinrichtung 33 untersucht und an die Kühlungseinrichtung 15 weitergegeben, an der das Produkt 11 gekühlt und für das folgende Komprimieren bzw. Formen an der Press- und/oder Formeinrichtung 17 und das Schneiden an der Schneidvorrichtung 19 vorbereitet wird. An der Sortier- und/oder Ausrichtungseinrichtung 21 wird das Produkt 11 aufgrund der an der Untersuchungseinrichtung 33 erfassten Lage des Knochens 67 derart ausgerichtet, dass ein Brechen bzw. Splittern dieses Knochens 67 während des Komprimierens des Produktes 11 an der Press- und/oder Formeinrichtung 17 verhindert werden kann. Unzureichend gekühlte Produkte 11 können wiederum über den Abzweig 69 auf die Funktionsstrecke F verteilt und gegebenenfalls der Kühleinrichtung 15 erneut über die Zufuhr 71 zugeführt werden, während insbesondere unbrauchbare Produkte 11 in den Entnahme- und/oder Kontrollbereich 25 befördert werden können.

Entlang der Transportstrecke T werden die Produkte 11 von der Sortier- und/oder Ausrichtungseinrichtung 21 über die Untersuchungseinrichtung 35 an die Press- und/oder Formeinrichtung 17 befördert, wo die Produkte 11 komprimiert und/oder geformt werden. Dabei kann die Press- und/oder Formeinrichtung 17 auch dazu ausgebildet sein, die Form der Produkte 11 gezielt und wunschgemäß zu verändern, sodass ein direktes Formen der Produkte 11 erfolgen kann. Neben der erfassten Lage des Knochens 67, können weitere an den vorgelagerten und/oder an den nachgelagerten Komponenten der Verarbeitungslinie 13 bestimmte Parameter an der Press- und/oder Formeinrichtung 17 berücksichtigt werden, sodass die Bearbeitung individuell auf das jeweilige Produkt 11 angepasst erfolgen kann.

Nach der Press- und/oder Formeinrichtung 17 werden die Produkte 11 mittels der Untersuchungseinrichtung 37 erneut untersucht und an eine weitere Sortier- und/oder Ausrichtungseinrichtung 23 befördert. An dieser kann beispielsweise eine weitere Änderung der Ausrichtung der Produkte 11 erfolgen, um diese korrekt an die Schneidvorrichtung 19 weiterzugeben. Beispielsweise ist hier gezeigt, dass das betreffende Produkt 11 durch eine erneute Drehung ausgerichtet wird, sodass an der Schneidvorrichtung 19 Scheiben 39 geschnitten werden, die keinen Anteil des Knochens 67 beinhalten. Aufgrund der erfassten und bestimmten Lage des Knochens 67 kann der Schneidvorgang durch ein Zurückziehen des Produktes 11 abgebrochen werden, bevor ein Schneiden in den Knochen 67 erfolgt, sodass der Produktrest mit dem Knochen 67 ausgeschossen werden kann.

Ferner ist auch der Sortier- und/oder Ausrichtungseinrichtung 23 ein Abzweig 70 nachgelagert, über den die Produkte 11 auf die Funktionsstrecke F verteilt werden können. Insbesondere Produkte 11, bei denen beispielsweise anhand der während des Komprimierens an der Press- und/oder Formeinrichtung 17 auftretenden Presskräfte bzw. deren Verlauf ermittelt werden konnte, dass ein Knochen 67 gesplittert ist, können über die Funktionsstrecke F in den Entnahme- und/oder Kontrollbereich 25 geführt und überprüft oder ausgeschossen werden. Unzureichend komprimierte bzw. nicht zufriedenstellend geformte Produkte 11 können ferner über die Zufuhr 72 der Press- und/oder Formeinrichtung 17 erneut zugeführt werden, sodass letztlich ein gewünschtes Resultat der Bearbeitung der Produkte 11 an dieser erreicht werden kann.

Die Fig. 3A bis 3C zeigen konzeptionelle Darstellungen einer Ausführungsform einer Press- und/oder Formeinrichtung 17, für die in der vorliegenden Anmeldung auch unabhängig von dem vorstehend beschriebenen System zur Verarbeitung von Produkten 11 Schutz beansprucht wird.

Fig. 3A zeigt ein Produkt 11 mit einem Knochen 67, das in die Press- und/oder Formeinrichtung 17 befördert wurde. Diese weist vier verfahrbare Kontaktelemente 57, 59, 61 und 63 auf, die beispielsweise mittels eines nicht gezeigten Servomotors verfahren werden können, um das Produkt 11 zu komprimieren bzw. zu formen. Um eine Komprimierung zu erreichen und auf die Form des Produktes 11 einzuwirken, können die Kontaktelemente 59 und 63 gegen bzw. entlang der Längsrichtung L verfahren werden, während die Kontaktelemente 57 und 61 in Querrichtung Q zueinander verfahrbar sind. Entsprechend bildet jeweils eines der Kontaktelemente 57 und 61 bzw. eines der Kontaktelemente 59 und 63 ein jeweiliges Gegenelement 57, 59 des anderen Kontaktelements 61, 63, die zusammenwirken, um ein Produkt 11 zu komprimieren und dessen Form zu verändern. Ferner kann die Press- und/oder Formeinrichtung 17 weitere Kontakt- bzw. Gegenelemente aufweisen, die beispielsweise senkrecht zur der Längsrichtung L und der Querrichtung Q verfahrbar sind, um die Produkte 11 auch in dieser Richtung komprimieren bzw. formen zu können.

In Längsrichtung L unmittelbar an das Kontaktelement 59 angeschlossen befindet sich eine Schneidebene M, in der ein Messer 20 bewegt wird, um das Produkt 11 in Scheiben 39 zu schneiden. Dieses Messer 20 kann insbesondere als umlaufendes Kreis- oder Sichelmesser ausgebildet sein. Durch den unmittelbaren Anschluss der Schneidebene M ist eine Aufschneidevorrichtung in die Press- und/oder Formeinrichtung 17 integriert und die Press- und/oder Formeinrichtung 17 weist einen integrierten Slicer auf. Die Schneidvorrichtungen 19 der Fig. 1 und 2 sind somit hier direkt in die Press- und/oder Formeinrichtung 17 integriert.

Um einen Vorschub des Produktes 11 nach dem Komprimieren bzw. Formen in die Schneidebene M zu ermöglichen, weist das in Längsrichtung verschiebbare Kontaktelement 63 zwei Greiferarme 65 auf, mittels derer das Produkt 11 gegriffen und während des Vorschubs gehalten werden kann. Das Kontaktelement 63 kann somit in vorteilhafter Weise eine Doppelfunktion erfüllen, indem es sowohl dem Komprimieren bzw. Formen des Produktes 11 als auch als Vorschubelement 63 zu dessen Vorschub in die Schneidebene M dient.

Grundsätzlich kann es auch vorgesehen sein, das Produkt 11 mittels der Greifarme 65 oder sonstiger Mittel bereits vor dem Komprimieren bzw. Formen zu halten und durch nicht gezeigte, von dem Messer 20 in der Regel verschiedene Schneidmittel zurechtzuschneiden. Dadurch kann beispielsweise eine Verkleinerung des Produktes 11 erreicht werden, die durch ein reines Komprimieren aufgrund der maximal erreichbaren Kräfte an den Kontaktelementen 57, 59, 61 und 63 nicht möglich ist. Ferner können so eventuell festgestellte mangelbehaftete Ränder der Produkte 11 entfernt werden.

Fig. 3B zeigt das Produkt 11 während des Komprimierens und/oder Formens durch die Kontaktelemente 57, 59, 61 und 63. Während dieses Komprimierens sind die Greiferarme 65 des Kontaktelements 63 nach außen versetzt, sodass auch das Kontaktelement 63 zum Komprimieren und Formen des Produktes 11 genutzt werden kann.

Wie ferner ersichtlich wird, umfasst das Kontaktelement 61 mehrere Teilelemente 62, durch die das Kontaktelement 61 formveränderlich ausgebildet ist. Mittels dieser Teilelemente 62 kann das Kontaktelement 61 an die Kontur des Produktes 11 und insbesondere die Form des Knochens 67 angepasst werden, sodass ein Brechen und Splittern dieses Knochens 67 während des Komprimierens des Produktes 11 verhindert werden kann. Insbesondere kann es dabei vorgesehen sein, dass die Teilelemente 62 aufgrund einer vorhergehend erfassten Lage des Knochens 67 bereits automatisch an den Verlauf dieses Knochens 67 angepasst ausgerichtet werden, bevor das Produkt 11 in die Press- und/oder Formeinrichtung 17 gelangt. Ferner kann es auch vorgesehen sein, dass sich die Teilelemente 62, wie hier angedeutet, durch einen während des Komprimierens entstehenden Druck automatisch an die Form des Produktes 11 bzw. des Knochens 67 anpassen.

Indem das formveränderliche Kontaktelement 61 bzw. dessen Teilelemente 62 direkt ansteuerbar ausgebildet sein können, können diese grundsätzlich vor dem Komprimieren eines Produktes 11 auch in eine vorgegebene oder vorgebbare Position gebracht werden, um dadurch direkt auf die Kontur des komprimierten Produktes 11 einzuwirken. Dadurch kann das Produkt 11 während des Komprimierens in eine gewünschte Form gebracht werden, wobei durch die Veränderung der Form des Kontaktelements 61 prinzipiell jedwede Kontur erzeugt werden kann und die erzeugbaren Konturen nicht auf geradlinige Formen beschränkt sind. Insbesondere kann es dazu vorgesehen sein, weitere oder alle der Kontaktelemente 57, 59 und 63 gleichermaßen formveränderlich auszubilden.

Neben der hier gezeigten Ausbildung des Kontaktelements 61 mit mehreren verschiebbaren Teilelementen 62 kann es auch vorgesehen sein, dass das Kontaktelement 61 aus einem elastischen Material gefertigt ist, sodass sich ein einteiliges Kontaktelement 61 an die Struktur des Produktes 11 anpassen kann. Ferner können das Kontaktelement 61 oder bestimmte Teilbereiche dessen von einem beispielsweise mit einem Gas, insbesondere auch mit Luft, oder mit einem Gel gefüllten Kissen überdeckt sein, sodass eine Formveränderung des Kontaktelements 61 bzw. dessen Oberfläche zur Anpassung an eine Kontur eines Produktes 11 durch einen Druck auf dieses Kissen erfolgen kann.

Wie Fig. 3C zeigt, können die Greiferarme 65 nach dem Fertigstellen des Komprimierens bzw. Formen des Produktes 11 in dieses eingreifen, um ein Halten oder einen Vorschub des Produktes 11 in die Schneidebene M zu ermöglichen. Dazu können die Greiferarme 65 beispielsweise verschwenkbar an dem Kontaktelement 63 angeordnet sein, wobei auch ein Einfahren der Greiferarme 65 entgegen der Längsrichtung L während des Komprimierens und ein darauffolgendes Ausfahren denkbar ist. Ferner kann ein Greifer beispielsweise mit einem oder mehreren Widerhaken ausgebildet sein, die bereits während des Komprimierens bzw. Formens in das Produkt 11 eingreifen.

Um einen Vorschub des Produktes 11 in die Schneidebene M zu ermöglichen, kann insbesondere das Kontaktelement 59 auch in Querrichtung Q verfahren werden, um den Weg für das Produkt 11 in Längsrichtung L freizugeben. Ferner kann das Kontaktelement 57 in Querrichtung Q derart verschiebbar sein, dass das Produkt 11 in Querrichtung Q von einer Transportstrecke T auf eine Funktionsstrecke F geschoben und beispielsweise in einen Entnahme- und/oder Kontrollbereich 25 geführt werden kann (vgl. Fig. 1 und 2). Dadurch kann trotz der kompakten Bauweise ohne einen gesonderten Transportbereich zwischen der Press- und/oder Formeinrichtung 17 und der Schneidebene M erreicht werden, dass als unbrauchbar erkannte Produkte 11 auf einfache Weise und ohne weitere Einrichtungen aussortiert werden können.

Durch dieses Integrieren der Schneidvorrichtung 19 in die Press- und/oder Formeinrichtung 17 kann somit eine besonders platzsparende Bauweise erreicht und die Press- und/oder Formeinrichtung 17 vielseitig genutzt werden. Dabei soll auch durch die hier veranschaulichte Ausführungsform lediglich das Konzept einer solchen Press- und/oder Formeinrichtung 17 mit integrierter Schneidvorrichtung verdeutlicht werden.

### Bezuaszeichenliste

- 11: Produkt
- 13: Verarbeitungslinie
- 15: erste Arbeitsstation, Kühleinrichtung
- 17: zweite Arbeitsstation, Press- und/oder Formeinrichtung
- 19: dritte Arbeitsstation, Schneidvorrichtung
- 20: Messer
- 21: erste Sortier- und/oder Ausrichtungseinrichtung
- 23: zweite Sortier- und/oder Ausrichtungseinrichtung
- 25: Entnahme- und/oder Kontrollbereich
- 27: vorgelagerte Funktionseinheit, Produktlager
- 29: nachgelagerte Funktionseinheit, Verpackungsmaschine
- 31: Kennzeichnungseinrichtung
- 33: Identifikationseinrichtung, erste Untersuchungseinrichtung
- 35: zweite Untersuchungseinrichtung
- 37: dritte Untersuchungseinrichtung
- 39: Produktscheibe
- 41: Transporteinrichtung
- 43: Mittel
- 45: Auswerte- und Steuereinrichtung
- 47: Warneinrichtung
- 49: Anzeige- und Eingabeeinrichtung
- 51: Prozessor
- 53: Mittel der vorgelagerten Funktionseinheit
- 55: Mittel der nachgelagerten Funktionseinheit
- 57: erstes Kontaktelement, erstes Gegenelement
- 59: zweites Kontaktelement, zweites Gegenelement
- 61: drittes Kontaktelement, drittes Gegenelement
- 62: formveränderliches Teilelement
- 63: viertes Kontaktelement, viertes Gegenelement, Vorschubmittel
- 65: Greiferarm
- 67: Knochen
- 69: erster Abzweig
- 70: zweiter Abzweig
- 71: erste Zufuhr
- 72: zweite Zufuhr

- F: Funktionsstrecke
- L: Längsrichtung
- M: Schneidebene
- Q: Querrichtung
- S1: erste Spur
- S2: zweite Spur
- S3: Spur der Funktionsstrecke
- T: Transportstrecke

## Patentansprüche

1. System zur Verarbeitung von aufzuschneidenden und/oder zu zerteilenden Lebensmittelprodukten (11), insbesondere zur Verarbeitung von Frischfleisch und/oder von Bacon,
mit einer Verarbeitungslinie (13), die mehrere Arbeitsstationen (15, 17, 19) und eine ein- oder mehrspurige Transporteinrichtung (41) zum Transport der Produkte (11) entlang einer Transportstrecke (T) von Arbeitsstation (15, 17) zu Arbeitsstation (17, 19) umfasst,
wobei zumindest eine der Arbeitsstationen (15, 17, 19) ein Mittel (43) zur Bestimmung wenigstens eines Parameters aufweist, wobei das Mittel (43) mit einer Auswerte- und Steuereinrichtung (45) verbunden ist, die dazu ausgebildet ist, in Abhängigkeit des wenigstens einen Parameters ein Steuersignal zu erzeugen.

2. System nach Anspruch 1,
wobei die Auswerte- und Steuereinrichtung (45) mit einer Warneinrichtung (47) verbunden ist, die dazu ausgebildet ist, in Abhängigkeit des Steuersignals einen Warnhinweis zu erzeugen.

3. System nach Anspruch 1 oder 2,
wobei die Auswerte- und Steuereinrichtung (45) mit einer Anzeigeeinrichtung (49) verbunden ist, wobei die Anzeigeeinrichtung (49) dazu ausgebildet ist, in Abhängigkeit des Steuersignals eine Anweisung zu einer Anpassung zumindest einer Stellgröße zumindest einer Arbeitsstation (15, 17, 19) anzuzeigen.

4. System nach einem der vorhergehenden Ansprüche,
wobei die Auswerte- und Steuereinrichtung (45) mit wenigstens einer anderen Arbeitsstation (15, 17, 19) verbunden ist, wobei die Auswerte- und Steuereinrichtung (45) dazu ausgebildet ist, durch die Übermittlung des Steuersignals automatisch zumindest eine Stellgröße der wenigstens einen anderen Arbeitsstation (15, 17, 19) anzupassen.

5. System nach einem der vorhergehenden Ansprüche,
wobei die Auswerte- und Steuereinrichtung (45) einen Prozessor (51) umfasst, der dazu ausgebildet ist, einen selbstlernenden Algorithmus auszuführen.

6. System nach einem der vorhergehenden Ansprüche,
wobei die Verarbeitungslinie (13) zumindest eine Untersuchungseinrichtung (33, 35, 37) zur Bestimmung wenigstens eines Produktmerkmals umfasst, wobei die Untersuchungseinrichtung (33, 35, 37) mit der Auswerte- und Steuereinrichtung (45) verbunden ist, wobei die Auswerte- und Steuereinrichtung (45) dazu ausgebildet ist, in Abhängigkeit des wenigstens einen Produktmerkmals ein weiteres Steuersignal zu erzeugen.

7. System nach einem der vorhergehenden Ansprüche,
wobei die Verarbeitungslinie (13) eine Sortier- und/oder Ausrichtungseinrichtung (21, 23) umfasst, die mit der Auswerte- und Steuereinrichtung (45) verbunden ist, wobei die Sortier- und/oder Ausrichtungseinrichtung (21, 23) dazu ausgebildet ist, in Abhängigkeit des Steuersignals die Orientierung der Produkte (11) zu verändern und/oder die Produkte (11) auf unterschiedliche Spuren (S1, S2, S3) zu verteilen.

8. System nach einem der vorhergehenden Ansprüche,
wobei die Verarbeitungslinie (13) zumindest eine von der Transportstrecke (T) abzweigende Funktionsstrecke (F) umfasst, auf der die Produkte (11) an eine vorgelagerte Stelle der Transportstrecke (T) zurückführbar sind und/oder auf der die Produkte (11) in einen Entnahme- und/oder Kontrollbereich (25) führbar sind und/oder auf der die Produkte (11) an eine der Verarbeitungslinie (13) vorgelagerte Funktionseinheit (27) zurückführbar sind.

9. System nach einem der vorhergehenden Ansprüche,
wobei zumindest eine der Verarbeitungslinie (13) vorgelagerte Funktionseinheit (27) vorgesehen ist, die mit der Auswerte- und Steuereinrichtung (45) verbunden ist, und/oder wobei zumindest eine der Verarbeitungslinie (13) nachgelagerte Funktionseinheit (29) vorgesehen ist, die mit der Auswerte- und Steuereinrichtung (45) verbunden ist,
wobei die Auswerte- und Steuereinrichtung (45) dazu ausgebildet ist, durch die Übermittlung des Steuersignals an die jeweilige Funktionseinheit (27, 29) automatisch zumindest eine Stellgröße der Funktionseinheit (27, 29) anzupassen
und/oder wobei die jeweilige Funktionseinheit (27, 29) ein weiteres Mittel (53, 55) zur Bestimmung wenigstens eines weiteren Parameters aufweist, wobei das weitere Mittel (53, 55) mit der Auswerte- und Steuereinrichtung (45) verbunden ist, wobei die Auswerte- und Steuereinrichtung (45) dazu ausgebildet ist, in Abhängigkeit des weiteren Parameters ein entsprechendes Steuersignal zu erzeugen.

10. System nach einem der vorhergehenden Ansprüche,
wobei eine der Arbeitsstationen (15, 17, 19) der Verarbeitungslinie (13) eine Kühleinrichtung (15) zur Kühlung der Produkte (11) ist.

11. System nach einem der vorhergehenden Ansprüche,
wobei eine der Arbeitsstationen (15, 17, 19) der Verarbeitungslinie (13) eine Press- und/oder Formeinrichtung (17) ist, die zumindest ein verfahrbares Kontaktelement (57, 59, 61, 63), insbesondere zumindest einen Stempel, umfasst, mittels dessen die Produkte (11) komprimierbar und/oder formbar sind, wobei die Press- und/oder Formeinrichtung (17) insbesondere einen Servomotor umfasst, mit dem das zumindest eine Kontaktelement (57, 59, 61, 63) antreibbar ist.

12. System nach Anspruch 11,
wobei die Press- und/oder Formeinrichtung (17) zumindest ein Gegenelement (57, 59, 61, 63) aufweist, mit dem das zumindest eine Kontaktelement (57, 59, 61, 63) zusammenwirkt, um das Produkt (11) zu komprimieren und/oder zu formen, wobei das Gegenelement (57, 59, 61, 63) und/oder das Kontaktelement (57, 59, 61, 63) zumindest teilweise formveränderlich ausgebildet sind.

13. System nach Anspruch 11 oder 12,
wobei in die Press- und/oder Formeinrichtung (17) eine Schneidvorrichtung (19) zum Aufschneiden der Produkte (11) in Scheiben (39), insbesondere ein automatischer Slicer, integriert ist, wobei die Press- und/oder Formeinrichtung (17) insbesondere ein Vorschubmittel (63) aufweist, welches dazu ausgebildet ist, die Produkte (11) in eine Schneidebene (M) der Schneidvorrichtung (19) vorzuschieben, in welcher die Produkte (11) mittels eines Messers, insbesondere eines rotierenden Kreismessers oder Sichelmessers, in Scheiben (39) geschnitten werden.

14. System nach einem der vorhergehenden Ansprüche,
wobei eine der Arbeitsstationen (15, 17, 19) der Verarbeitungslinie (13) eine Schneidvorrichtung (19), insbesondere ein automatischer Slicer, zum Schneiden der Produkte (11) in Scheiben (39) und/oder zum Zerteilen der Produkte (11) ist.

15. System nach einem der vorhergehenden Ansprüche,
wobei der Verarbeitungslinie (13) eine Verpackungsmaschine (29) zum Verpacken der verarbeiteten Produkte (11) nachgelagert ist; und/oder
wobei der Verarbeitungslinie (13) ein Produktlager (27) vorgelagert ist.
